# EUROPEAN PATENT APPLICATION

(11) **EP 3 916 696 A1**
(43) Date of publication of application: **01.12.2021**
(21) Application number: 19914783.6
(22) Date of filing: 30.08.2019
(51) Int. Cl.: G08G 1/0968

(54) **METHOD, APPARATUS AND DEVICE FOR DRIVING CONTROL, AND MEDIUM AND SYSTEM**

(30) Priority: 13.02.2019 WO PCT/CN2019/074989
(71) Applicant: Beijing Baidu Netcom Science and Technology Co., Ltd., Beijing 100085 (CN)
(72) Inventor: ZHANG, Zhuhua, Beijing 100085 (CN); BAO, Zewen, Beijing 100085 (CN); HU, Xing, Beijing 100085 (CN)
(74) Representative: Wynne-Jones IP Limited
(86) International application number: PCT/CN2019/103876
(87) International publication number: WO 2020/164238

(57) **Abstract**

A method, apparatus and device for driving control, and a medium and a system. The method for driving control comprises: an external device of a vehicle acquiring sensing information related to an environment where the vehicle is located (480); determining, based on the sensing information, a description related to a target object that is present in the environment, wherein the target object is located outside the vehicle (485); generating, at lease based on the description related to the target object, a driving-related message (490), wherein the driving-related message comprises at least one of a sensing message, a decision planning message and a control message; and providing the driving-related message for the vehicle, so as to control the travel of the vehicle relative to the target object (495). Therefore, an object, that may affect the travel of a vehicle, in an environment can be more accurately detect in a timely manner, thereby guiding the travel of the vehicle.

## Description

### CROSS-REFERENCE TO RELATED APPLICATION

The present application claims the benefit of priority of PCT International Patent Application PCT/CN2019/074989, titled "DRIVING CONTROL METHOD AND APPARATUS, DEVICE, MEDIUM, AND SYSTEM", filed on February 13, 2019, the entirety of which is incorporated herein by reference.

### TECHNICAL FIELD

Embodiments of the present disclosure generally relate to a field of computer, and in particular, to automatic driving control technology.

### BACKGROUND

With the development and progress of science and technology, controlling driving of a transportation means through an automatic control system may bring convenience to people's travel. In recent years, as an application scenario of artificial intelligence, automatic driving (also referred to as unmanned driving) has become a new direction for the development of various transportation means, particularly of the automobile industry. The ability of a transportation means to autonomously drive is becoming increasingly expected. Generally, implementation of autonomous driving may include perceiving a surrounding environment of a transportation means through a sensing device, performing a decision-making plan regarding driving based on a perception result, and controlling a specific driving operation of the transportation means according to the decision-making plan. Therefore, the accuracy and efficiency of any of environment perception, decision planning and control will affect the driving safety and comfort of a transportation means and the operating efficiency of an overall transportation system.

### SUMMARY

According to embodiments of the present disclosure, a scheme for driving control is provided.

In a first aspect of the present disclosure, a driving control assisting method is provided. The method includes: acquiring, by an external device of a transportation means, perception information related to an environment of the transportation means; determining a description related to a target object present in the environment based on the perception information, the target object being located outside the transportation means; generating a driving-related message based on at least the description related to the target object, the driving-related message including at least one of a perception message, a decision planning message, and a control message; and providing the driving-related message to the transportation means for controlling a travel of the transportation means relative to the target object.

In a second aspect of the present disclosure, a method for driving control is provided. The method includes: receiving a driving-related message from an external device of a transportation means, the driving-related message being generated based on perception information related to an environment of the transportation means, and indicating a description related to a target object located outside the transportation means, and the driving-related message including at least one of a perception message, a decision planning message, and a control message; and controlling, based on the driving-related message, driving of the transportation means in the environment relative to the target obj ect.

In a third aspect of the present disclosure, a driving control assisting apparatus is provided. The apparatus includes: a perception acquisition module, configured to acquire, by an external device of a transportation means, perception information related to an environment of the transportation means; a target object determination module, configured to determine a description related to a target object present in the environment based on the perception information, the target object being located outside the transportation means; a message generation module, configured to generate a driving-related message based on at least the description related to the target object, the driving-related message including at least one of a perception message, a decision planning message, and a control message; and a message provision module, configured to provide the driving-related message to the transportation means for controlling a travel of the transportation means relative to the target object.

In a fourth aspect of the present disclosure, an apparatus for driving control is provided. The apparatus includes: a message receiving module, configured to receive a driving-related message from an external device of a transportation means, the driving-related message being generated based on perception information related to an environment of the transportation means, and indicating a description related to a target object located outside the transportation means, and the driving-related message including at least one of a perception message, a decision planning message, and a control message; and a driving control module, configured to control, based on the driving-related message, driving of the transportation means in the environment relative to the target object.

In a fifth aspect of the present disclosure, an electronic device is provided. The electronic device includes: one or more processors; and a storage device for storing one or more programs, wherein the one or more programs, when being executed by the one or more processors, enable the one or more processors to implement the method according to the first aspect of the present disclosure.

In a sixth aspect of the present disclosure, an electronic device is provided. The electronic device includes: one or more processors; and a storage device for storing one or more programs, wherein the one or more programs, when being executed by the one or more processors, enable the one or more processors to implement the method according to the second aspect of the present disclosure.

In a seventh aspect of the present disclosure, there is provided a non-transitory computer-readable storage medium, which stores computer instructions for enabling a computer to perform the method according to the first aspect of the present disclosure.

In an eighth aspect of the present disclosure, there is provided a non-transitory computer-readable storage medium, which stores computer instructions for enabling a computer to perform the method according to the second aspect of the present disclosure.

In a ninth aspect of the present disclosure, there is provided a system for coordinated driving control, including: a roadside subsystem including the apparatus according to the third aspect of the present disclosure; and a vehicle-mounted subsystem including the apparatus according to the fourth aspect of the present disclosure.

It should be understood that the content described herein is neither intended to denote key or critical elements of embodiments of the present disclosure, nor to limit the scope of the present disclosure. Further features of the present disclosure may be readily understood from the following description.

### BRIEF DESCRIPTION OF THE DRAWINGS

In conjunction with the drawings and with reference to the following detailed description, the above and other features, advantages and aspects of embodiments of the present disclosure will become more apparent. In the drawings, same or similar reference signs refer to same or similar elements, in which:
FIG. 1 is a schematic diagram showing an example environment in which a plurality of embodiments of the present disclosure may be implemented;
FIG. 2 is a block diagram showing a coordinated driving control system according to some embodiments of the present disclosure;
FIG. 3A to FIG. 3F are schematic diagrams showing example scenarios of a coordinated driving control according to some embodiments of the present disclosure;
FIG. 4A is a flowchart showing a driving control assisting method on a roadside according to some embodiments of the present disclosure;
FIG. 4B is a flowchart showing a driving control assisting method on a roadside according to some embodiments of the present disclosure;
FIG. 5A is a flowchart showing a method for driving control on a vehicle side according to some embodiments of the present disclosure;
FIG. 5B is a flowchart showing of a method for driving control on a vehicle side according to some embodiments of the present disclosure;
FIG. 6A a schematic block diagram showing an apparatus for driving control on a roadside according to some embodiments of the present disclosure;
FIG. 6B a schematic block diagram showing an apparatus for driving control on a roadside according to some embodiments of the present disclosure
FIG. 7A a schematic block diagram showing an apparatus for driving control on a vehicle side according to some embodiments of the present disclosure;
FIG. 7B a schematic block diagram showing an apparatus for driving control on a vehicle side according to some embodiments of the present disclosure; and
FIG. 8 is a block diagram showing a device capable of implementing a plurality of embodiments of the present disclosure.

### DETAILED DESCRIPTION OF THE EMBODIMENTS

Embodiments of the present disclosure will be described below in more detail with reference to the drawings. Although some embodiments of the present disclosure are shown in the drawings, it should be understood that the present disclosure can be implemented in various forms and should not be construed as being limited to the embodiments set forth herein. On the contrary, these embodiments are provided for more thorough and complete understanding of the present disclosure. Therefore, those ordinary skilled in the art should envisage that various changes and modifications may be made to embodiments described herein, without departing from the scope and spirit of the present application. Likewise, descriptions of well-known functions and structures are omitted in the following description for clarity and conciseness.

In the description of embodiments of the present disclosure, the term of "include" and similar terms thereto should be understood as an open-ended inclusion, i.e., "including but not limited to". The term "based on" should be understood as "at least in part based on". The term "one embodiment" or "the embodiment" should be understood as "at least one embodiment". The terms "first", "second", etc. may refer to different or the same objects. The following text may further include other explicit and implicit definitions.

As mentioned above, environment perception, a decision planning and/or a control are very important aspects in driving control of a transportation means, especially in automatic driving control. In the current field of automatic driving, a vehicle itself is required to be able to perceive a surrounding environment and have computing power to process a perception result and generate operating instructions. However, a driving based on single-vehicle perception is greatly limited. For example, sensing devices and computing devices installed on a vehicle have high manufacturing and maintenance costs while low reuse rates. Restricted by the location and visual field of a vehicle, sensing devices of the vehicle have a limited perception range and are easy to be blocked, thus, it is difficult to obtain a global perception capability. In addition, since the decision planning and the control of a driving are performed from the perspective of a single vehicle, it is impossible to improve overall traffic passage efficiency, or to solve a vehicle passage problem under special circumstances.

According to embodiments of the present disclosure, there is provided an improved driving control scheme, which achieves the driving control of a transportation means based on multi-side coordination. Specifically, an external device of a transportation means generates at least one of a perception message, a decision planning message, and a control message based on perception information related to an environment. The perception message, the decision planning message, and/or the control message generated are provided to the transportation means, which achieve a driving control based on the received message. In some embodiments, a description related to a target object present in the environment, particularly a description related to a target object located outside the transportation means, may be determined based on the perception information. A driving-related message is generated based on description related to a target object. Thus, the automatic driving of transportation means may be controlled relative to a target object, achieving more flexible and efficient driving control.

According to some example embodiments, it is further proposed an improved coordinated driving control scheme. Specifically, a remote device determines whether a target object is in an abnormal motion state based on perception information related to an environment. When it is determined that the target object is in an abnormal motion state, a driving-related message is generated to indicate the abnormal motion state of the target object. The generated driving-related message is provided to transportation means, to control the transportation means to travel on a motion trajectory not colliding with the target object. Thus, an abnormal object in an environment which may affect the travelling of transportation means may be detected more accurately and timely, thereby guiding the transportation means to travel safely.

Embodiments of the present disclosure will be described below in detail with reference to the drawings.

### Example Environment

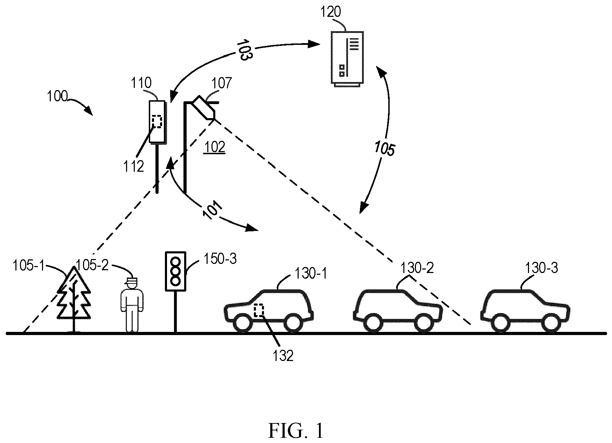

FIG. 1 is a schematic diagram showing an example traffic environment 100 in which a plurality of embodiments of the present disclosure may be implemented. One or more transportation means 130-1, 130-2 and 130-3 are included in the example environment 100. For the convenience of description, the transportation means 130-1, 130-2 and 130-3 are collectively referred to as transportation means 130. As used herein, a transportation means refers to any type of tool that may carry people and/or things and is movable. In FIG. 1 and other drawings and descriptions herein, the transportation means 130 is shown as a vehicle. A vehicle may be a motor vehicle or a non-motor vehicle, examples of which include but are not limited to a car, a sedan, a truck, a bus, an electro mobile, a motorcycle, a bicycle, etc. However, it should be understood that the vehicle is only an example of the transportation means. Embodiments of the present disclosure are also applicable to other transportation means, such as a ship, a train, an airplane, etc.

One or more transportation means 130 in an environment 100 may be a transportation means with a certain automatic driving capability, which may also be referred to as an unmanned transportation means. Of course, another or some other transportation means 130 in an environment 100 may be those having no automatic driving capability. Such a transportation means may be controlled by a driver. An integrated device or a removable device in one or more transportation means 130 may be capable of communicating with other devices based on one or more communication technologies, for example, communicating with other transportation means or other devices based on communication technologies, such as Vehicle-to-Vehicle (V2V) technology, Vehicle-to-Infrastructure (V2I) technology, Vehicle-to-Network (V2N) technology, Vehicle-to-Everything (V2X) or Internet of Vehicles technology, or any other communication technology.

The transportation means 130 may be equipped with a positioning device to determine its own location. The positioning device may, for example, implement positioning based on any one of the following technologies: a positioning technology based on laser point cloud data, a global positioning system (GPS) technology, a global navigation satellite system (GLONASS) technology, a Beidou navigation system technology, a Galileo positioning system technology, a quasi-zenith satellite system (QAZZ) technology, a base station positioning technology, a Wi-Fi positioning technology, etc.

In addition to the transportation means 130, there may be other objects in an environment 100, such as movable or immovable objects, like animals, plants 105-1, persons 105-2, and transportation infrastructure. The traffic infrastructure includes objects for guiding a traffic passage and indicating a traffic rule, such as traffic signal lights 150-3, a traffic sign (not shown), a road lamp, and so on. Objects outside the transportation means are collectively referred to as out-vehicle objects 105. During driving control of a certain transportation means 130, it is necessary to note an out-vehicle object which may affect the driving of the transportation means, such an object is referred to as a target object.

In the environment 100, one or more external devices of the transportation means 130 are further deployed, such as a roadside device 110 and a remote device 120. External devices are usually arranged independently of the transportation means 130 and may be located remotely from the transportation means 130. Herein, a device that is "independent" of the transportation means 130 refers to a device that at least does not move with the movement of the transportation means 130. The roadside device 110 and the remote device 120 may be any device, node, unit, facility, etc. having computing capabilities. As an example, a remote device may be a general-purpose computer, a server, a mainframe server, a network node such as an edge computing node, a cloud computing device such as a Virtual Machine (VM), and any other device that provides computing power.

In an embodiment of the present disclosure, the transportation means 130 may have a wired and/or wireless communication connection with a roadside device 110. For example, one or more transportation means 130 may have a communication connection 101 with the roadside device 110, a communication connection 103 with a remote device 120, and there may also be a communication connection 105 between the roadside devices 110 and 120. Note that for each transportation means 130, a communication connection may be established with one of the roadside devices 110 and 120, or each transportation means 130 may have a communication connection with both of the roadside devices 110 and 120.

Via the communication connection, the roadside device 110 and/or the remote device 120 may master or assist in controlling the driving of one or more transportation means 130 through signaling transmission and reception. For example, a roadside subsystem 112 (also referred to as "a road subsystem") is integrated/installed/fixed in the roadside device 110, and a vehicle-mounted subsystem 132 is integrated/installed/fixed in the transportation means 130-1. The roadside subsystem 112 and the vehicle-mounted subsystem 132 communicate with each other to implement driving control of the transportation means 130. Different vehicle-mounted subsystems may also be communicated with each other, to achieve a coordinated driving control. Although not shown, in addition to the roadside device 110 and the transportation means 130-1, other roadside devices and transportation means may also be equipped with a roadside subsystem 112 and a vehicle-mounted subsystem 132, respectively.

In some embodiments, the roadside device 110 may be deployed near a geographic area where the transportation means 130 is traveling and/or parking, for example, roadside devices may be deployed on both sides of a road at certain intervals, or at a predetermined distance from a location where the transportation means 130 may appear. In some implementations, the communication connection 101 between the transportation means 130 and the roadside device 110 may be based on a short-range communication technology. Of course, the communication connection 101 may also be based on technologies that realize other range communications, and in this respect, the scope of the present disclosure is not limited thereto.

In some embodiments, the remote device 120 may be a networked computing infrastructure. For example, the remote device 120 may be deployed in a cloud or in a computing node in other network environments, such as a remote computing node, a server, or an edge computing device. In a cloud environment, the remote device 120 may sometimes be referred to as a cloud device. The remote device 120 may provide greater computing power, storage capability, and/or communication capability. The communication connection 103 between the remote device 120 and the roadside device 110 and/or the communication connection 105 between the remote device 120 and the transportation means 130 may be based on a long-range communication technology. Although it may not be physically located near the driving area of the transportation means 130, the remote device 120 may still achieve a real-time control and/or a non-real-time control of the transportation means 130 through a high-speed communication connection.

One or more sensing devices 107 are further arranged in the environment 100. The sensing device 107 is arranged independently of the transportation means 130 and is used to monitor the condition of the environment 100, to obtain perception information related to the environment 100. For example, the sensing device 107 may sense traffic participants in an environment 100, including but not limited to the transportation means 130, pedestrians, cyclists and other target objects, and detect information of a target object, such as type, location, speed and direction information. The sensing device 107 may also be referred to as a roadside sensing device. The roadside device 110, especially the one deployed near the driving environment, may have wired and/or wireless communication connections with one or more sensing devices 107. If the communication rate allows, the farther remote device 120 may also be able to communicate with one or more sensing devices 107, or transfer via the roadside device 110. Perception information collected by the sensing device 107 arranged corresponding to the road may also be referred to as roadside perception information. Perception information of the sensing device 107 may be provided to the roadside device 110 having a communication connection. Although shown as mutually independent devices, in some implementations, the sensing device 107 and the roadside devices 110 and 120 may also be partially or fully integrated with each other.

A plurality of sensing devices 107 may be arranged at a certain interval, to monitor a specific geographic range of the environment 100. In some examples, in addition to fixing the sensing device 107 at a specific location, a movable sensing device 107, such as a movable perceiving station, may also be provided. Depending on the perception capability, a perception range of the sensing device 107 is limited. FIG. 1 schematically shows a perception range 102 of the sensing device 107. Objects or phenomena appearing in the perception range 102 may be sensed by the sensing device 107. In the example of FIG. 1, the out-vehicle objects 105-1 to 105-3 and the transportation means 130-1 and 130-2 are all located within the perception range 102 of the sensing device 107. The transportation means 130-3 is not within the perception range 102, and it may not be within the perception range of any sensing device, or it may be within the perception range of any other sensing device not shown. In some cases, the perception ranges of a plurality of adjacently deployed sensing devices 107 may partially overlap.

In order to monitor the environment 100 related to the transportation means 130 more comprehensively, the sensing device 107 may be arranged near the area where the transportation means 130 is traveling and/or parking. As needed, the sensing device 107 may be arranged on a roadside, or a road surface, or deployed at a certain height such as being fixed at a certain height by a support rod. The sensing device 107 may include one or more sensor units, which may be of a same type or different types, and may be distributed at a same location or different locations in the perception range 102.

Examples of the sensor units in the sensing device 107 may include, but are not limited to: an image sensor (such as a camera), a laser radar, a millimeter wave radar, an infrared sensor, a positioning sensor, an illumination sensor, a pressure sensor, a temperature sensor, a humidity sensor, a wind speed sensor, a wind direction sensor, an air quality sensor, etc. An image sensor may collect image information; a laser radar and a millimeter wave radar may collect laser point cloud data; an infrared sensor may use infrared ray to detect environment conditions in an environment; a positioning sensor may collect location information of an object; an illumination sensor may collect measurement values indicating an illumination intensity in an environment; a pressure sensor, a temperature sensor and a humidity sensor may collect measurement values indicating a pressure, a temperature and a humidity, respectively; a wind speed sensor and a wind direction sensor may collect measurement values indicating a wind speed and a wind direction, respectively; an air quality sensor may collect some air quality-related indicators, such as oxygen concentration, carbon dioxide concentration, dust concentration, and pollutant concentration in the air. It should be understood that only some examples of sensor units are listed above. According to actual needs, there may be other types of sensors.

It should be understood that the facilities and objects shown in FIG. 1 are only examples. The type, number, and relative arrangement of objects that appear in different environments may vary. The scope of the present disclosure is not limited in this respect. For example, the environment 100 may have more roadside devices 110 and sensing devices 107 deployed on roadside, to monitor additional geographic locations. Embodiments of the present disclosure may involve a plurality of remote devices 120, or may not involve any remote device 120.

### Example System

According to embodiments of the present disclosure, regardless of the automatic driving capability of the transportation means, an external device of the transportation means, including a roadside device or a remote device, is configured to coordinate with the transportation means, to provide a partial or full driving control of the transportation means. The partial or full driving control is achieved by providing a perception message, a decision-planning message and/or a control message to the transportation means. As a result, a roadside subsystem of a remote device and a vehicle-mounted subsystem on a transportation means realize a coordinated driving control. By realizing the function of driving control of a transportation means with the assistance of an external device, effective safe automatic driving may be achieved.

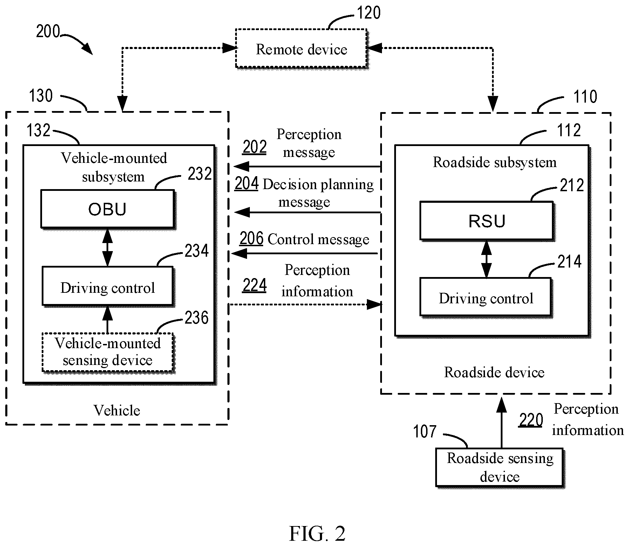

FIG. 2 is a schematic block diagram showing a coordinated driving control system 200 according to some embodiments of the present disclosure. The system 200 involves the transportation means 130, the roadside device 110, and the roadside sensing device 107 of FIG. 1. In some embodiments, the remote device 120 may also perform a driving control together with or in replacement of the roadside device 110, especially when the communication rate between the remote device 120 and the transportation means 130 allows. Therefore, functions described below for the roadside device 110, especially the roadside subsystem 112, may also be implemented at the remote device 120 accordingly. In some embodiments, a coordinated driving control may also involve traffic infrastructure in a driving environment, such as traffic signal lights 150-3.

As shown in FIG. 2, the roadside subsystem 112 of the roadside device 110 includes a roadside unit (RSU) 212 and a driving control module 214, and the vehicle-mounted subsystem 132 in the transportation means 130 includes an on-board unit (OBU) 232 and a driving control module 234, and optionally includes one or more vehicle-mounted sensing devices 236 arranged in association with the transportation means 130. The RSU 212 is configured to communicate with devices and/or components external to the roadside subsystem 112, such as with another roadside subsystem 112, a remote device 120 and/or a vehicle-mounted subsystem 132, and the OBU 232 is configured to communicate with devices and/or components external to the vehicle-mounted subsystem 132, such as with a roadside subsystem 112, another vehicle-mounted subsystem 132 and/or a remote devices 120.

The driving control module 214 in the roadside subsystem 112 is configured to process driving control-related information and generate a driving-related message to be transmitted by the RSU 212, for driving control of the transportation means 130. The driving control module 234 in the vehicle-mounted subsystem 132 is configured to process driving control-related information, acquire a driving-related message, and control the driving of the transportation means 130 based on an information processing result and/or an acquired driving-related message.

A driving-related message may have any format in conformity with a communication technology used between the roadside subsystem 112 and the vehicle-mounted subsystem 132. The driving-related messages may include at least one of: a perception message 202 indicating an environment perception result, a decision-planning message 204 indicating a decision plan of the transportation means 130 while driving, and a control message 206 indicating a specific driving operation of the transportation means 130 while driving. In terms of order, the information indicated by these three types of messages depends on the information contained in the previous type of message, respectively. For example, a decision plan is based at least on an environment perception result, and a control message is usually made based on a decision plan or an environment perception result. This means that if the perception message 202 and/or the decision-planning message 204 are/is sent to the vehicle-mounted subsystem 132, the vehicle-mounted subsystem 132 needs to perform further processing to obtain a control message, to achieve driving control of the transportation means 130. The transportation means 130 may be equipped with a wired control system, including a braking system, a steering system, a drive system, automobile body control and so on for controlling a vehicle, which are capable of controlling the acceleration, deceleration, steering, lights, double flash and the like of a vehicle.

From the perception message, to the decision-planning message, and then to the control message, the driving control of the transportation means 130 is constantly clarified, and the requirements for the automatic driving control capability on the side of the transportation means 130 is gradually lowered. In the interaction with the vehicle-mounted subsystem 132, the specific type of a driving-related message provided may depend on various triggering factors, such as at least one of a time-based trigger, a location-based trigger, and an event-based trigger.

A time-based trigger may be, for example, broadcasting periodically one or more predetermined types of driving-related messages or sending the same within a specific time period, such as sending a perception message. Transportation means 130 having established a communication connection with the roadside device 110 and being within a communication range may receive a broadcast driving-related message, particularly the perception message 202.

A location-based trigger may be, for example, triggering one or more predetermined types of driving-related messages based on the location of a transportation means 130. It may be determined whether the transportation means 130 is in a predetermined area (e.g., a traffic intersection), in a specific road section, and/or whether a distance from a reference object (e.g., the roadside device 110) is within a predetermined threshold, etc., and a predetermined type of driving-related message is sent when a condition is determined to be satisfied. Under such a triggering condition, the perception message 202, the decision-planning message 204, and/or the control message 206 may be sent.

An event-based trigger may include, for example, a request from the vehicle-mounted subsystem 132. The vehicle-mounted subsystem 132 may send a specific type of a driving-related message according to an instruction of the request. Alternatively or additionally, an event-based trigger may further include detecting an occurrence of a predetermined event related to the transportation means 130. For example, if it is detected that the transportation means 130 is in a dangerous state, a failure state, or a power shortage state, etc., a decision-planning message 204 and a control message 206 may be sent, to deal with the dangerous state and the failure state, and reduce the computation and power consumption at the transportation means 130. Other events that trigger the transmission of one or more driving-related messages may also be defined.

The generation and specific content of each driving-related message will be described below in detail.

### Perception Message

Specifically, a RSU 212 in a roadside subsystem 112 is configured to acquire perception information related to a detected environment 100 from one or more environment perception sources, and generate driving-related messages 202, 204 and 206 based on the perception information. The perception information may indicate one or more aspects of the environment 100 and objects present therein, depending on the capability of the environment perception sources. For driving control, perception information includes at least information related to objects present in the environment 100.

An environment perception source may include one or more roadside sensing devices 107 that provide roadside perception information 220 to a roadside subsystem 112. Such a roadside sensing device may provide a better viewing angle of perception and a more comprehensive and accurate environment perception. Due to the presence of a roadside sensing device 107, even when a transportation means 130 has no perception capability, or only has a limited perception capability, and/or has a perception blind zone due to the occlusion of other objects, it may still has roadside-based perception to complete an automatic driving function, thereby realizing a low-cost safe automatic driving.

Alternatively or additionally, an environment perception source may further include a vehicle-mounted sensing device 236 on the transportation means 130, including a target transportation means 130 to be controlled and other transportation means 130, which provide transportation means perception information 224 to a roadside subsystem 112. The type, number, and/or perception capability of a vehicle-mounted sensing device 236 may be the same as or different from the one or more roadside sensing devices 107. In some embodiments, the environment perception source may further include a remote device 120, which may obtain perception information related to an environment 100 from a database and/or other devices. By synthesizing perception information from different environment perception sources, a coordinated perception of an environment 100 may be realized, to perceive the environment 100 more comprehensively. Such coordinated perception may make up for the limitations of one or more aspects of the perception accuracy, the perception perspective, and the perception type of different environment perception sources.

One or more environment perception sources may utilize corresponding types of sensing devices to monitor static and/or dynamic objects in an environment 100, such as pedestrians, cyclists, transportation means, objects protruding from the road surface, etc., and may also detect traffic facilities related to the traffic passage, such as traffic signal lights and traffic sign lights. Alternatively or additionally, environment perception sources may also monitor road surface conditions, road traffic conditions, weather conditions in an environment, geographic areas, monitoring and diagnosis of target transportation means, etc. Perception information obtained by a RSU 212 from an environment perception source may be original perception data collected by a sensing device, partially processed perception data, and/or a perception result. For example, perception information from a vehicle-mounted subsystem 132 may be original perception data, or perception data or perception result partially or completely processed by a driving control module 234.

The obtained perception information is provided to a driving control module 214. The driving control module 214 is configured to perform an analysis based on the perception information. Specifically, the driving control module 214 may be configured to recognize objects that may appear in an environment 100 based on the perception information, and determine information related to the recognized objects. The driving control module 214 may also be configured to determine a perception result of one or more other aspects of an environment 100 and/or the transportation means 130 in the environment 100 based on the perception information. The driving control module 214 may use various data analysis technologies such as a data fusion technology to process perception information. In some embodiments, by analyzing perception information, the driving control module 214 may generate a perception message 202, including an analysis result of the perception information. The perception message 202 may be provided to an OBU 232 in the vehicle-mounted subsystem 132 via the RSU 212.

At the transportation means 130, the driving control module 234 in the vehicle-mounted subsystem 132 may perform a driving control of the transportation means 130 based on the perception message 202. For example, the driving control module 234 may generate a self-vehicle decision plan based on the perception message 202, and control the self-vehicle driving operation based on the generated decision plan. In some embodiments, if the transportation means 130 has an environment perception capability, such as being integrated with an vehicle-mounted sensing device 236, and/or may obtain perception information from devices other than the roadside device 110 (e.g., other transportation means 130), then the driving control module 234 may perform a driving control of the transportation means 130 based on the perception message 202 received from the RSU 212 together with other perception information. The sources of different perception messages/information may be processed through technologies such as data fusion. In some embodiments, if a transportation means 130 has no environment perception capability, the driving control module 234 may directly use a received perception message 202 as an input of a decision control of the transportation means 130.

Depending on the source and specific content of perception information, the perception message 202 may include indication information related to an environment 100 and/or one or more other aspects of transportation means 130 in the environment 100. In some embodiments, the perception message 202 may include following information related to one or more aspects: a description related to a target object present in the environment 100, for example, may include at least one of a classification, location information, speed information, direction information, physical appearance descriptive information, a specific type, a motion state, retention time of a motion state, perception confidence, historical motion trajectory information, predicted motion trajectory information, and state tracking information of the object; information related to a physical condition of a road in the environment 100, for indicating at least one of a road surface physical condition of the road and structured information of the road; information related to a traffic facility in the environment 100, for indicating at least one of a state of a signal light and a traffic sign on the road; information related to a road traffic condition in the environment 100, for indicating at least one of a sign, traffic flow and a traffic event related to the road and/or a lane in the road; and information related to a weather condition in the environment 100. In some embodiments, the perception message 202 may further include auxiliary information related to positioning of the transportation means 130, diagnosis information of a failure of the transportation means 130, information related to an Over-The-Air (OTA) of a software system of the transportation means 130, and/or time information.

In some embodiments, the perception message 202 may further include map information which may indicate, for example, at least one of an identification of a map, an update mode of the map, an area of the map to be updated and location information. Map information may indicate a high-precision map that meets the requirement of an automatic driving scenario. The identification of a map may include, for example, a version number of the map, an update frequency of the map, etc. The update mode of a map may indicate, for example, an update source (from a remote device 120 or other external sources), an update link, update time, etc., of the map.

In some embodiments, the perception message 202 may further include information related to a parking area of the transportation means 130. When the transportation means 130 has a parking intention, for example, when it is detected that the transportation means 130 approaches to a predetermined parking geographic area or initiates a parking request, the perception message 202 may include information related to the parking area of the transportation means 130. Certainly, in some embodiments, information related to a parking area of the transportation means 130 may always be included in the perception message 202 without a determination of parking intention. The information related to a parking area may include information related to a parking spot (e.g., parking space) in the parking area, information of an obstacle in the parking area, etc. In some embodiments, the information related to a parking area may include, for example, a predetermined serial number of a parking spot in the parking area, location information of a parking spot, a physical state description of a parking spot, an idle state of a parking spot, and/or entrance and exit information of the parking area.

In some embodiments, information related to a parking area may be provided, for example, from a remote device 120 to a roadside device 110. The roadside device 110 makes the information included in a perception message 202 and provides to the transportation means 130, to assist the transportation means 130 for finding a suitable parking spot as soon as possible. In some embodiments, the roadside device 110 may also make the information related to a parking area not included in the perception message 202, but generate a subsequent decision-planning message 204 and/or a control message 206 based on such information, to control the driving and/or parking of the transportation means 130 in the parking area.

For the convenience of understanding, some specific examples and descriptions of different types of information in a perception message 202 are given below in Table 1.1.

**Table 1.1 Perception Message (RSU→OBU)**

| indication information | specific content | unit | remarks |
|---|---|---|---|
| time information | current moment | ms | |
| description related to a target object | classification | character | pedestrian/cyclist/motor vehicle/non-motor vehicle/ stationary obstacle/obstacle, which may be further classified into more types according to an authority of an object (e.g., rescue, construction, command, etc.), a passing request, an object identification or a signboard, and an appearance of an object (e.g., color, size), etc. |
| | motion state | integer sequence | selected from a group consisting of a plurality of predetermined states, including motion states listed in Table 1.3 for example, each of the predetermined states corresponding to a respective index value |
| | retention time of motion state | | time information (e.g., start time, end time, duration, etc.) indicating that a target object retains a specific motion state |
| | type | integer | selected from a group consisting of a plurality of predetermined types, including the types listed in Table 1.2 for example, each of the predetermined type corresponding to a respective index value |
| | perception confidence | | indicating a confidence of a description related to a target object detected based on perception information |
| | location information | deg & m | location information may be uniformly represented by points in a specific coordinate system that may be any geocentric coordinate system, parametric coordinate system, and coordinate system after translation and rotation. When describing a point in a coordinate system, it may be actual original data and converted data (e.g., data for performing parameter integralization) of the coordinate system. For example, location information of GPS data may be described with latitude, longitude (in a unit of deg) and altitude data (in a unit of m) |
| | physical appearance descriptive information | | description of a size (e.g., length, width, height), a color, corner point data, a center point location, a ground clearance, etc. of an object, specific representation may refer to Tablel.4 |
| | speed | m/s | |
| | speed direction | deg | it may form a clockwise angle with true north |
| | acceleration | m/s² | |
| | acceleration direction | deg | it may form a clockwise angle with true north |
| | state tracking information | | indicating corresponding time (start time, end time) and/or corresponding time length of a target object in different motion states |
| | historical trajectory information | | a motion trajectory of an object in a past period of time, including information such as locations and speeds of a target object at different moments in the past |
| | predicted trajectory information | | a predicted motion trajectory of an object in a future time period, including information such as location and speed information of a target object at different moments in the future |
| information related to physical conditions of a road | road surface physical conditions | | whether a road surface has potholes or accumulated water or dust, is maintained, is closed, etc. |
| | structured information of a road | | a ramp indication of a road (e.g., a distance, a turning radius, the number of lanes, etc. of a ramp), a type of a road (highway, ordinary road), the number of lanes of a road |
| information related to traffic facilities | State of a signal light | integer | states of various indicator lights in signal light facilities and other data |
| | traffic signs | | signs indicating road passage rules, e.g., a speed limit sign, a height limit sign, and a steering restriction sign |
| information of road traffic condition | density of traffic participants on a road section of a road | | traffic participants include motor vehicles, non-motor vehicles, pedestrians, etc. |
| | average speed of traffic participants on a road section | | may calculate the average speed of the same type transportation means, especially the motor vehicles |
| | start location of a road section | | descripting the start location of a road section corresponding to current traffic condition information |
| | end location of road section | | descripting the end location of a road section corresponding to current traffic condition information |
| | lane level congestion condition description of a road section | | descripting the congestion condition of each lane, including but not limited to density, speed, or queue length, etc. of vehicles when a road has a plurality of lanes |
| | duration of current traffic condition | | |
| | signs of a road | | |
| | signs of a lane | | |
| | traffic events | | events, such as traffic accidents and road maintenance, on a specific road or a specific lane |
| information related to weather conditions | weather conditions | | indicating weather of various aspects, e.g., a temperature, a moderation, an air pollution level, an illumination, etc. |
| auxiliary information related to positioning | auxiliary positioning information | | assisting transportation means for more accurate positioning |
| diagnosis information of a failure | diagnosis result | | diagnosis information of failures in hardware, software and other components of the transportation means |
| information related to OTA | OTA data | | for updating one or more software systems of the transportation means |
| map information | map data | | indicating at least one of an identification of a map, e.g., a high-precision map used, a version, an update mode of the map, an area of the map to be updated, and location information |
| information related to a parking area | predetermined serial number of a parking spot | | a parking area is pre-divided into one or more parking spots with predetermined serial numbers |
| | location information of a parking spot | | accurate positioning of a parking spot, such as a location at a center of the parking spot |
| | physical state description of a parking spot | | a size of a parking spot, e.g., may be described with length and width, or with corner point data, and/or may include a shape of the parking spot, etc. |
| | idle state of a parking spot | | the number of idle parking spots |
| | entrance and exit information of a parking area | | locations of entrance and exit, and/or a route indication |

**Table 1.2 Types of Target Object**

| type | remarks |
|---|---|
| whole object | |
| dynamic object | an unmarked obstacle in a high-precision map |
| static object | a marked obstacle in a high-precision map |

**Table 1.3 Motion State of Target Object**

| motion state | remarks |
|---|---|
| static | the speed is zero or less than a threshold |
| dynamic | having a certain speed (greater than a threshold) |
| | may be classified into other motion states according to moving speeds |

**Table 1.4 Physical Appearance Descriptive Information of Target Object**

| information item | remarks |
|---|---|
| descriptive approach of appearance | in terms of corner points, bounding polygons, etc. |
| collection of descriptive points | may be three-dimensional spatial point coordinates, and may be described with latitude, longitude and altitude |
| length, width and height | |
| ground clearance | |
| color collection | one or more colors of the target object |
| center point location | |

Although some examples of the content contained in a perception message 202 are listed above, it should be understood that the perception message 202 may further include other content, including less or more content. In each communication, the perception message 202 provided from a roadside subsystem 112 to a vehicle-mounted subsystem 132 may be all or part of the above content in Tables 1.1-1.4, or it may include other content. During transmission, the perception message 202 or constituent elements therein may be, for example, data-compressed, to further reduce the amount of data transmitted between the roadside and the transportation means.

In some embodiments, the vehicle-mounted subsystem 132 on one transportation means 130 may also provide perception data, for example, in a format of the perception message 202 to the vehicle-mounted subsystem 132 on other transportation means 130 (e.g., through the communication connection between OBUs). In one embodiment, the perception message 202 communicated between the vehicle-mounted subsystems 132 may mainly include a description related to a target object, such as the descriptions related to target objects concerned in the above Tables 1.1 to 1.4. The perception message communicated between the vehicle-mounted subsystems 132 may be, for example, listed separately below in Table 1.5.

**Table 1.5 Perception Message (OBU→OBU)**

| indication information | specific content | unit | remarks |
|---|---|---|---|
| time information | current moment | ms | |
| location information | center point location | | a location of physical transportation means where a vehicle-mounted subsystem sending a perception message is located |
| description related to a target object | classification | character | pedestrian/cyclist/motor vehicle/non-motor vehicle/stationary object/obstacle, which may be further classified into more types according to an authority of an object (e.g., rescue, construction, command, etc.), a passing request, an object identification or a signboard, and an appearance of an object (e.g., color, size), etc. |
| | motion state | integer sequence | selected from a group consisting of a plurality of predetermined states, including motion states listed in Table 1.3 for example, each of the predetermined states corresponding to a respective index value |
| | retention time of motion state | | time information (e.g., start time, end time, duration, etc.) indicating that a target object retains a specific motion state |
| | type | integer | selected from a group consisting of a plurality of predetermined types, including the types listed in Table 1.2 for example, each of the predetermined type corresponding to a respective index value |
| | perception confidence | | indicating a confidence of a description related to a target object detected based on perception information |
| | location information | deg & m | location information may be uniformly represented by points in a specific coordinate system that may be any geocentric coordinate system, parametric |
| | | | coordinate system, and coordinate system after translation and rotation. When describing a point in a coordinate system, it may be actual original data and converted data (e.g., data for performing parameter integralization) of the coordinate system. For example, location information of GPS data may be described with latitude, longitude (in a unit of deg) and altitude data (in a unit of m) |
| | physical appearance descriptive information | | description of a size (e.g., length, width, height), a color, corner point data, a center point location, a ground clearance, etc. of an object, specific representation may refer to Tablel.4 |
| | speed | m/s | |
| | speed direction | deg | it may form a clockwise angle with true north |
| | acceleration | m/s2 | |
| | acceleration direction | deg | it may form a clockwise angle with true north |
| | state tracking information | | indicating corresponding time (start time, end time) and/or corresponding time length of a target object in different motion states |
| | historical trajectory information | | a motion trajectory of an object in a past period of time, including information such as locations and speeds of a target object at different moments in the past |

### Decision planning message

A decision planning message 204 may be generated by a driving control module 214 of a roadside subsystem 112 based on perception information. The driving control module 214 processes the perception information, determines a perception result, and generates the decision planning message 204 based on the perception result. When a decision plan is performed, the driving control module 214 may determine to perform the plan according to a level of a road or a lane, and perform a unified plan for transportation means 130 on a same road or a same lane. In addition, the driving control module 214 may also perform a plan according to a level of the transportation means. Due to more comprehensive perception information of an environment 100, the roadside subsystem 112 may consider the conditions of all of the transportation means or traffic participants in a certain geographic area, to determine a more reasonable decision plan.

In some embodiments, when it is determined that the roadside end is required to intervene in the driving decision or plan of a transportation means 130, or when the roadside subsystem 112 takes over the driving control of a transportation means 130 (e.g., according to a geographic area, upon a request of the transportation means 130, or after obtaining a permission of the transportation means 130), the roadside subsystem 112 provides a decision planning message 204 to a vehicle-mounted subsystem 132. The decision planning message 204 may be, for example, provided to the vehicle-mounted subsystem 132 in real time, or at a smaller time interval (which may depend on the moving speed of the transportation means 130).

At the transportation means 130, the driving control module 234 in the vehicle-mounted subsystem 132 may perform a driving control of the transportation means 130 based on a decision planning message 204. For example, the driving control module 234 may generate self-vehicle control information based on the decision planning message 204, to indicate specific driving operations of the transportation means 130. In some embodiments, the vehicle-mounted subsystem 132, such as a driving control module 234 therein, may determine whether to use the decision planning message 204 to control the transportation means 130. In a case where a decision planning message 204 is not used, it may be discarded. In a case where a decision planning message 204 needs to be used, the driving control module 234 may fully comply with a decision plan for the transportation means 130 indicated in the decision planning message 204, to formulate a local decision plan, or alternatively, in conjunction with a local strategy and with reference to the decision plan indicated by the message 204, to formulate a local decision plan. Embodiments of the present disclosure are not limited in this respect.

The roadside subsystem 112 may achieve a global environment perception through various environment perception sources, including, but not limited to, information related to a road traffic condition, information related to a road physical state, information of infrastructures, map information, etc., and during the driving planning of the transportation means 130, road resources may be used more reasonably and effectively, to ensure safer and more effective driving.

In some embodiments, the decision planning message 204 may include following information related to one or more aspects: an indication of a travelling road on which a decision is to be applied, start time information and/or end time information of a decision plan, start location information and/or end location information of a decision plan, an identification of a transportation means targeted by a decision plan, decision information related to a driving behavior of a transportation means, decision information related to a driving action of a transportation means, information of a trajectory point of a route plan, expected time for arriving at a trajectory point of a route plan, information related to other transportation means involved in the decision plan, map information, time information, etc. The map information may indicate, for example, at least one of an identification of a map, an update mode of a map, an area of a map to be updated, and location information. The identification of a map may include, for example, a version number of a map, an update frequency of a map, etc. The update mode of a map may indicate, for example, an update source of the map (from a remote device 120 or other external sources), an update link, update time, etc.

For the convenience of understanding, some specific examples and descriptions of different types of information in a decision planning message 204 are given below in Table 2.

**Table 2. Decision Planning Message (RSU→OBU)**

| indication information | specific content | remarks |
|---|---|---|
| time information | current moment | |
| indication of a travelling road on which a decision is to be applied | a road/lane corresponding to a road/lane level decision | pedestrian / cyclist / transportation means / target object therein are considered |
| start time information of a decision plan | start time | indicating to a transportation means when to start an indicated decision plan |
| end time information of a decision plan | end time | indicating to a transportation means when to end an indicated decision plan |
| start location information of a decision plan | start location indication | indicating to a transportation means where to start an indicated decision plan |
| end location information of a decision plan | end location indication | indicating to a transportation means where to end an indicated decision plan |
| identification of a transportation means targeted by a decision plan | identification of a transportation means | a decision plan may be targeted to one or more transportation means, while other transportation means may ignore the received decision strategy |
| decision information related to a driving behavior | behavior-level decision | behaviors, e.g., following a transportation means ahead, stopping, allowing right of way, turning left, turning right, etc. |
| decision information related to a driving action | action-level decision | decision information, e.g., trajectory points of a route plan, time, a speed (it may form a clockwise angle with the true north), an acceleration, an angle, etc.; feedback control of a transportation means, including a throttle control, speeding up, braking, a steering wheel rotation and other actions |
| information related to a trajectory of a route plan | information of trajectory points of a route plan | it may be described with map data or longitude and latitude information |
| | expected time for arriving at trajectory points of a route plan | planning expected time for arriving at one or more trajectory points |
| information related to other transportation means | location of other transportation means | |
| | related information of other transportation means | identification, descriptive information, right-of-way information, etc., of other transportation means |
| map information | map data | indicating at least one of an identification of a map, e.g., a high-precision map used, an update mode of the map, an area of the map to be updated and location information |

Although some examples of the content contained in a decision planning message 204 are listed above, it should be understood that the decision planning message 204 may further include other content, including less or more content. In each communication, the decision planning message 204 provided from a roadside subsystem 112 to a vehicle-mounted subsystem 132 may be all or part of the above content in Table 2, or it may include other content. During transmission, the decision planning message 204 or constituent elements therein may be, for example, data-compressed, to further reduce the amount of data transmitted between the roadside and the transportation means.

### Control Message

A control message 206 may be generated by a driving control module 214 of a roadside subsystem 112 based on decision planning information. The control message 206 may specify a specific driving operation on a transportation means 206.

In some embodiments, when it is determined that the roadside end is required to intervene in the driving decision or plan of a transportation means 130, or when the roadside subsystem 112 takes over the driving control of a transportation means 130 (e.g., according to a geographic area, upon a request of the transportation means 130, or after obtaining a permission of the transportation means 130), the roadside subsystem 112 provides a control message 206 to a vehicle-mounted subsystem 132. The control message 206 may be, for example, provided to the vehicle-mounted subsystem 132 in real time, or at a smaller time interval (which may depend on the moving speed of the transportation means 130).

At the transportation means 130, the driving control module 234 in the vehicle-mounted subsystem 132 may perform a driving control of the transportation means 130 based on a control message 206. For example, the driving control module 234 may determine a specific driving operation on the transportation means 130 based on the control message 206. In some embodiments, the vehicle-mounted subsystem 132, such as a driving control module 234 therein, may determine whether to use the control message 206 to control the transportation means 130. In a case where a control message 206 is not used, it may be discarded. In a case where a control message 206 needs to be used, the driving control module 234 may fully comply with a control operation for the transportation means 130 indicated in the control message 206, to determine a local control operation, or alternatively, in conjunction with a local strategy and with reference to the control operation indicated by the message 206, to determine a local control operation. Embodiments of the present disclosure are not limited in this respect.

The roadside subsystem 112 may achieve a global environment perception through various environment perception sources, including, but not limited to, information related to a road traffic condition, information related to a road physical state, information of infrastructures, map information, etc., and during the formulation of a control operation on the transportation means 130, road resources may be used more reasonably and effectively, to ensure safe traveling of an automatic driving vehicle under special needs.

In some embodiments, the control message 206 may include following information related to one or more aspects: kinematic control information related to a motion of the transportation means, kinetic control information related to at least one of a power system, a transmission system, a brake system and a steering system of the transportation means, control information related to a ride experiences of a passenger in the transportation means, control information related to a traffic warning system of the transportation means, and time information.

For the convenience of understanding, some specific examples and descriptions of different types of information in a control message 206 are given below in Table 3.

**Table 3. Control Message (RSU→OBU)**

| indication information | specific content | remarks |
|---|---|---|
| time information | current moment | |
| kinematic control information | motion direction of a transportation means | indicating a motion direction |
| | speed of a transportation means | indicating a motion speed |
| | acceleration of a transportation means | indicating a motion acceleration |
| | kinematic correction | indicating a kinematic correction of a transportation means |
| kinetic control information of a transportation means | related control of a power system | involving components of an engine, such as an internal combustion engine, a motor, wheels, and the like, and indicating whether to output |
| | related control of a transmission system | indicating a gear, whether to cut off the power, parking, forwarding and/or reversing, and indicating a torque and a wheel speed of each driving wheel |
| | related control of a brake system | indicating one or more aspects of in a braking control system: a torque of each wheel, a braking force distribution, and parking |
| | related control of a steering system | indicate a steering angle of each wheel, etc. |
| control information related to a ride experience | involving a control of riding comfort | for example, an adjustment of a suspension in a transportation means |
| control information related to a traffic warning system | indication of each component of a traffic warning system | control of warning components of a vehicle in one or more aspects such as lighting, steering and whistling |

Although some examples of the content contained in a control message 206 are listed above, it should be understood that the control message 206 may further include other content, including less or more content. In each communication, the control message 206 provided from a roadside subsystem 112 to a vehicle-mounted subsystem 132 may be all or part of the above content in Table 2, or it may include other content. During transmission, the control message 206 or constituent elements therein may be, for example, data-compressed, to further reduce the amount of data transmitted between the roadside and the transportation means.

### Auxiliary Information from Transportation Means

In some embodiments, as mentioned above, a vehicle-mounted subsystem 132 at the transportation means 130 may further provide transportation means perception information 224 to a roadside subsystem 112 for the use by a driving control module 214 to generate a driving-related message. The transportation means perception information 224 may be directly transmitted by an OBU 232 to a RSU 212, or it may be processed to generate a perception message in a certain format.

A perception message provided by the vehicle-mounted subsystem 132 includes information related to an environment detected by a vehicle-mounted sensing device 236, and the types of content therein may include one or more of the types of the content in the perception message 202 from the roadside subsystem 112 to the vehicle-mounted subsystem 132. In some embodiments, a perception message provided by the vehicle-mounted subsystem 132 may include information related to an obstacle present in an environment 100, to indicate at least one of a type, location information, speed information, direction information, physical appearance descriptive information, a historical trajectory, and a predicted trajectory of the obstacle. In some embodiments, a perception message provided by the vehicle-mounted subsystem 132 may alternatively or additionally information related to a weather condition in an environment; auxiliary information related to positioning of the transportation means 130, such as information related to a road traffic condition in the environment; diagnosis information on a failure of the transportation means 130; information related to an OTA upgrade of a software system in the transportation means 130; and/or information related to a parking area of the transportation means 130.

The information related to a parking area of the transportation means 130 may be detected by a vehicle-mounted sensing device 236, when the transportation means 130 approaches to the parking area. Regarding the characteristics of a parking area, the vehicle-mounted subsystem 132 may determine, based on perception information of the sensing device 236, a predetermined serial number of a parking spot in the parking area, location information of the parking spot and/or an idle state of the parking spot, etc., as information related to the parking area. Through the information related to the parking area provided by the vehicle-mounted subsystem 132, the driving control module 214 in the roadside subsystem 112 may more accurately control the driving and/or parking of the transportation means 130 in the parking area.

Example types of specific content contained in perception messages from the transportation means 130 (e.g., the OBU 232) to the roadside device 110 (RSU 212) may refer to the perception message 202 shown Tables 1.1-1.4. Of course, it should be understood that it is unnecessary to include all of the types listed in the perception message 202, and in some embodiments, other types of information may also be indicated.

In some embodiments, in addition to the transportation means perception information 224 or alternatively, a roadside subsystem 112 may further acquire other types of information that a transportation means 130 may provide (e.g., received by a RSU 212 from an OBU 232). The acquired information may serve as auxiliary information for a driving control module 214 of a roadside subsystem 112 to determine a decision planning message 204 and/or a control message 206. Such auxiliary information may be generated and transmitted in any message format.

In some embodiments, a roadside subsystem 112 may acquire, for example, real-time running information of a transportation means 130. The real-time running information is related to a current running condition of the transportation means 130, and may include, for example, at least one of location information, traveling direction information, traveling route information, traveling speed information, operation state information, and component state information of the transportation means 130. In some embodiments, auxiliary information acquired from a vehicle-mounted subsystem 132 may also include auxiliary planning information of the transportation means 130, which indicates planning conditions of the transportation means 130. The auxiliary planning information may include, for example, at least one of an indication of traveling intention, planned traveling route information, and speed limit information of the transportation means 130.

Alternatively or additionally, auxiliary information acquired from a vehicle-mounted subsystem 132 may further include vehicle body information of a transportation means 130, to describe a physical state, an appearance state, etc., of the transportation means 130 per se. The vehicle body information may include, for example, at least one of identification, type, descriptive information, current traveling route information, and failure-related information of the transportation means 130. In addition, the auxiliary information may further include, for example, at least one of a special transportation means type and a right-of-way requirement level.

For the convenience of understanding, some specific examples and descriptions of the content indicated by an auxiliary message are given below in Table 4.

**Table 4. Auxiliary Information (OBU→RSU)**

| indication information | specific content | remarks |
|---|---|---|
| real-time running information | location information of a transportation means | location information may be uniformly represented by points in a specific coordinate system that may be any geocentric coordinate system, parametric coordinate system, and coordinate system after translation and rotation. When describing a point in a coordinate system, it may be actual original data and converted data (e.g., data for performing parameter |
| | | integralization) of the coordinate system. For example, location information of GPS data may be described with latitude, longitude, and altitude data |
| | information of a travelling direction | direction information may be uniformly described with a deflection angle of an object (such as, a transportation means) relative to a static position. The direction information may be original data or converted data (parameter integerization) of an angle |
| | information of a travelling route | it may be described with a collection of location information of a transportation means at each node of a route |
| | information of a travelling speed, an acceleration | including information related to a speed and/or an acceleration of the transportation means, such as a speed, a three-axis acceleration, a yaw angular velocity, etc. |
| | information of an operation state | light setting: indicating a state of each light, including such as steering lights, dipped headlights, headlights on full beam; |
| | | state of a steering wheel: indicating an angle of a steering wheel, the angle is described with a deflection angle relative to a horizontal direction, in actual implementation, it may be original data or converted data (parameter integerization) of the angle; brake state: indicating whether to brake, a description of a braking force, which may be divided into different levels for indication |
| | state information of a component | including state information of a vehicle body control component, a vehicle body sensing component, a display component, and/or other components on a vehicle, to indicate whether these components are in a good, alarm, or damaged state |
| auxiliary plan information | indication of travelling intention | indicating travelling intention of a transportation means, such as turning left, turning right, turning around, forwarding, outbound, inbound, etc. |
| | planned travelling route information speed limit information | it may be described with a collection of location information at each node of a route indicating a maximum speed and acceleration allowed by the transportation means, which may be indicated by means of a speed, an angular velocity, etc. |
| vehicle body information of a transportation means | identification | information capable of uniquely identifying a transportation means, which may be a vehicle identification number (VIN) code, a license plate number, etc. |
| | type | indicating a basic type of a transportation means; types of transportation means may be classified according to different dimensions, e.g., transportation means classification standards, industry applications, power and/or driving modes; |
| | | when transportation means are described, there may be multiple dimensions of information, for example, with respect to a right-of-way distribution, transportation means may be classified into ordinary transportation means, public transportation means and emergency vehicles; and in a scenario of parking, transportation means may be classified into a C-class vehicle, a B-class vehicle, an SUV, a large-scale vehicle, etc. |
| | descriptive information | description of a size (e.g., length, width, height), a color, corner point data, a center point, a ground clearance, etc., of a transportation means; for example, the center point of a transportation means may be used as a reference to describe the length, width and height; or corner points may be used for description (corner point data may still be described with location information) |
| | current traveling route information | it may be described with a collection of location information of a transportation means at each node of a route |
| | failure-related information | when a component of a transportation means fails, it may indicate or describe the failed portion, and/or indicate a failure diagnosis result, etc. |
| special transportation means indication information | special transportation means identification | indicating a basic type of a special transportation means; |
| | | types of special transportation means may be classified according to different dimensions, e.g., transportation means classification standards, industry applications, power and/or driving modes, etc.; when special transportation means are described, there may be multiple dimensions of information, for example, special transportation means may be classified into a bus, a fire truck, an emergency vehicle, a police car, a road rescue vehicle, etc., according to industry applications |
| | avoidance requirement of special transportation means | passing rules, fixed lane using rules, etc. for special transportation means |
| | right-of-way requirement level | indicating requirements of special transportation means for right-of-way, under normal circumstances, special transportation means have a priority of starting (the right-of-way may be classified into different levels, and different types of transportation means correspond to different levels of right-of-way |
| description related to a target object | | description related to a target object sensed by a vehicle-mounted sensing device and determined by a vehicle-mounted perception processing device, specific information may include description related to a target object listed in Table 1.1 and the associated Tables 1.2-1.4. |
| unmanned driving identification | | identifying whether a transportation means is in an unmanned (automatic driving) state |
| automatic driving level | | identifying an automatic driving level of a transportation means, the automatic driving level may be selected from multiple levels listed in a predetermined automatic driving capability level classification, such as the levels L0-L5 classified by Society of Automotive Engineers (SAE) |

Although some examples of the content contained in auxiliary information are listed above, it should be understood that auxiliary information may further include other content, including less or more content. In each communication, the auxiliary information provided from a roadside subsystem 112 to a vehicle-mounted subsystem 132 may be all or part of the above content in Table 4, or it may include other content. During transmission, auxiliary information, or constituent elements therein from a transportation means may be, for example, date-compressed, to further reduce the amount of data transmitted between the roadside and the transportation means.

The coordinated driving control system and some examples of message interaction and message composition therein are described above. In different scenarios, message interactions between a roadside subsystem 112 and a vehicle-mounted subsystem 132 for implementing coordinated driving control may be different, and there may also be other information interactions. Implementations of coordinated driving control on the roadside, the vehicle side, and possibly the cloud will be described below with reference to some example scenarios.

### Example Scenario at an Intersection

Generally, in the presence of signal lights, a vehicle with an automatic driving capability may obtain a current state of a signal light through perception means, and pass through an intersection in accordance with a traffic rule of "stop at red light and walk when it turns green". At an intersection where there is no signal light, each automatic driving vehicle may only rely on its own decision control, resulting in a low passage efficiency, such as a low passage efficiency due to the continuous "games" between respective automatic-driving transportation means.

In some embodiments of the present disclosure, in some environments of complicated traffic roads, such as at an intersection, a road section where congestion occurs frequently, or a road section with frequent traffic accidents recognized by the traffic department, an external device such as a roadside device 110 may perceive road traffic conditions of a surrounding road based on roadside perception information and perception information possibly from other sources, and perform a global driving control of passages of the vehicle according to global road traffic conditions, in this way, a passage strategy may be improved, thereby achieving a more effective, reasonable and safer driving control.

In some embodiments, a roadside subsystem 112 of a roadside device 110 may send a decision planning message and/or a control message to a transportation means 130 on a road, to guide the passage of the transportation means 130. Such a decision planning message may be specific to one or more lanes in an environment 100, or specific to the transportation means 130. If a control message is to be sent, the control message will be specific to the transportation means 130.

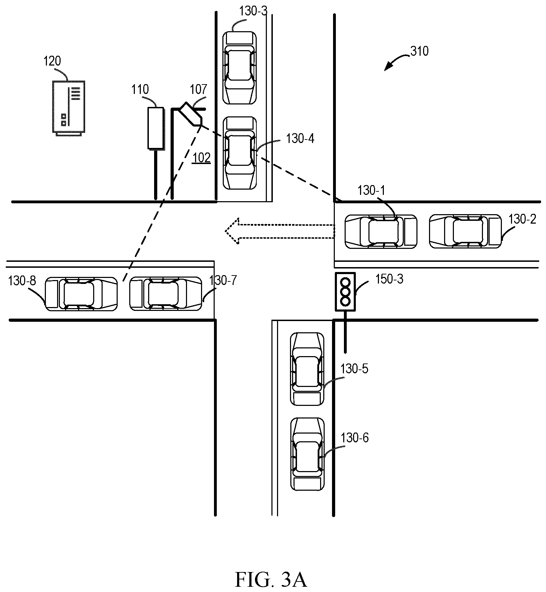

FIG. 3A shows a coordinated driving control in an example scenario 310 at an intersection. In this scenario, a plurality of transportation means (i.e., vehicles) 130-1-130-8 are traveling toward the intersection, and a roadside subsystem 112 may achieve a decision plan at a lane level.

In some embodiments, in such scenario, an OBU 232 of a vehicle-mounted subsystem 132 of one or more transportation means 130 may transmit transportation means perception information 224 to a roadside subsystem 112 of a roadside device 110, and may also transmit one or more auxiliary information, such as real-time running information, auxiliary planning information, vehicle body information, and special transportation means indication information. Within a communication range, a RSU 212 of the roadside subsystem 112 receives information transmitted by the OBU 232, and receives information of a roadside sensing device 107 and possible information from a remote device 120, thus global environment information may be acquired.

Since an external device, such as a roadside device, may obtain, from a roadside perception device and possibly other environment perception sources, comprehensive environment perception information, including perception data such as pedestrians, vehicles, cyclists, and road surface information in the environment, the environment perception capability may be further improved, and then the accuracy of subsequent decision planning and control may be improved. In some embodiments, the vehicle-mounted subsystem 132 may further indicate specific requirements of the transportation means 130 to the roadside subsystem 112 through a perception message. Such a perception message may include, for example, auxiliary information of the transportation means 130, such as the auxiliary information listed in the Table 4.

Next, the roadside subsystem 112 (e.g., the driving control module 214) may determine a driving-related message based on collected perception information. If a generated driving-related message includes a perception message 202, an environment perception result indicated in the perception message 202 may be more accurate and comprehensive than an environment perception result sensed by a single transportation means 130.

In some embodiments, since the traffic passage at an intersection may involve a global plan of a plurality of transportation means, a driving control module 214 of a roadside subsystem 112 may generate a decision planning message 204 based on information from a plurality of sources, to perform a decision planning on a road, a lane, or a vehicle level, in order to achieve effective and reasonable intersection passage. In one embodiment, the driving control module 214 generates a decision planning message specific to a lane, for example, a decision planning message may indicate that different rights of way are specified for different lanes, i.e., the passage rights of the transportation means 130 on the lanes, and may also indicate start time and end time of the corresponding rights of way. The right-of-way information of a lane may be obtained, for example, from a remote device 120, such as a system of a traffic management section. For a lane that may change dynamically in a period of time, such as a tidal flow lane, it is necessary to dynamically obtain the latest right-of-way information of the lane, so that the correct decision plan and control may be executed.

As one example, in the example of FIG. 3A, the roadside subsystem 112 determines that the lanes where the transportation means 130-1 and 130-2 are located have a right to go straight at an intersection, and also specifies start time and end time of going straight.

Some specific examples and descriptions of the information in the decision planning message for realizing a lane level control are given below in Table 5.

**Table 5. Decision Planning Message (RSU→OBU)**

| indication information | specific content | remarks |
|---|---|---|
| time information | current moment | |
| indication of a travel road on which a decision is to be applied | lane for making a lane level decision | considering pedestrian / cyclist / transportation means / target object in the lane |
| start time information of a decision plan | start time | indicating a transportation means when to start an indicated decision plan |
| end time information of a decision plan | end time | indicating a transportation means when to end an indicated decision plan |
| start location information of a decision plan | indication of a start location | indicating a transportation means where to start an indicated decision plan |
| end location information of a decision plan | indication of an end location | indicating a transportation means where to end an indicated decision plan |
| right-of-way information of a lane | right-of-way information | indicating a right of way for a lane |

The decision planning message 204 may be transferred to a vehicle-mounted subsystem 232 in a time period during which or within a starting location at which a transportation means 130 is determined as under a roadside control. In some embodiments, a decision planning message specific to a lane may be broadcast, and the transportation means 130 receives the decision planning message and determines whether to use the received decision planning message according to a lane where the transportation means 130 itself is located. In some embodiments, the roadside subsystem 112 may firstly determine that a specific transportation means 130 is located in a certain lane, and then send a driving-related message specific to the lane to the transportation means 130.

After receiving the decision planning message 204, the transportation means 130 may control the transportation means 130 according to a decision planning strategy indicated in the decision planning message 204, to ensure that the transportation means 130 is driven according to the decision planning strategy of the roadside subsystem 112. For example, in FIG. 3A, the transportation means 130-1 and 130-2, after receiving the decision planning message, may travel through the intersection at the start time indicated by the decision planning message. When the end time indicated by the decision planning message is reached, the transportation means 130 may stop travelling through the intersection.

In some embodiments, a driving-related message may be specific to a transportation means 130. For example, a perception message may include a description of a target object related to the transportation means 130, and decision plan messages may be customized for respective individual transportation means 130. A control message is completely used to control driving of a specific transportation means 130. Therefore, after receiving a specific driving-related message, a vehicle-mounted subsystem 132 on a transportation means 130 may perform driving control accordingly. In some embodiments, the driving control module 214 may directly generate a control message 206, to indicate a specific control operation on the transportation means 130, and then a RSU 212 provides the control message 206 to an OBU 232.

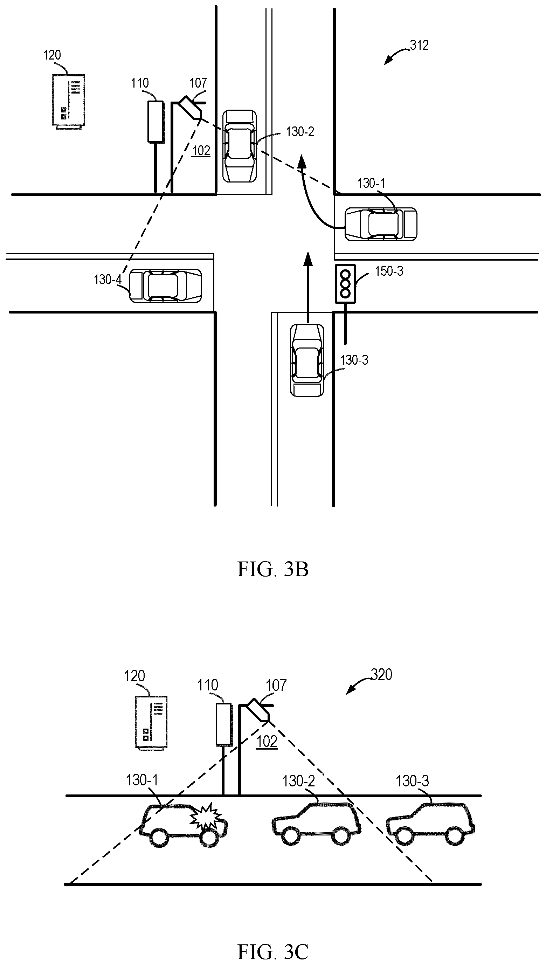

As one example, FIG. 3B illustrates a coordinated driving control under an example scenario 312 at an intersection. In this scenario, a plurality of transportation means (i.e., vehicles) 130-1 to 130-4 are travelling toward the intersection, and the roadside subsystem 112 may realize a decision plan at a transportation means level. Specifically, based on perception information from a plurality of sources, the driving control module 214 of the roadside subsystem 112 may specify the transportation means 130-1 to turn right and the transportation means 130-3 to go straight through the intersection. Next, the driving control module 214 generates a decision planning message specific to the transportation means 130-1, to guide the transportation means 130-1 to perform a right-turning operation. In addition, the driving control module 214 further generates a decision planning message specific to the transportation means 130-4, to guide the transportation means 130-1 to go straight.

In some embodiments, the roadside subsystem 112 may also control traffic signal lights 150-3 on the roadside, to jointly implement a communication strategy. In some embodiments, the decision planning of the roadside subsystem 112 may also be implemented on roads without signal lights, to allow the safe and efficient passage of transportation means.

### Example Scenario of Takeover of Transportation Means

An application of a decision control message 204 or a control message 206 means that the partial driving control or full driving control of a transportation means 130 will be performed by an external device, such as a roadside device 110. In some embodiments, such a partial driving control or full driving control is activated only when it is determined that the roadside device 110 may take over the transportation means 130. A takeover of the transportation means 130 may be caused by many reasons. For example, it may be because the transportation means 130, in particular, the transportation means 130 in an automatic driving mode, cannot deal with a current driving scenario, such as a software and/or hardware failure, and a normal driving requires a coordinated operation with other transportation means (e.g., a travel is stopped since the transportation means is besieged by surrounding vehicles), etc. At this time, the intervention of a roadside vehicle may help the transportation means 130 "get out of trouble" without manual intervention, which improves the automatic running capability of an automatic driving transportation means. Of course, in some cases, the transportation means 130 may request a takeover by a roadside device 110 for any other reason, for example, in order to realize automatic parking, etc.

FIG. 3C shows a coordinated driving control under an example scenario 320 of taking over the transportation means 130. In this scenario, the transportation means 130-1 is blocked by surrounding transportation means or fails, for example, the automatic driving is stopped on the road. In response to such an event, the vehicle-mounted subsystem 132 in the transportation means 130-1 may send a takeover request message to a roadside subsystem 112, to request a takeover of the driving control of the transportation means 130. The driving control module 214 of the roadside subsystem 112 may thus provide a control message 206 to the transportation means 130-1. In some embodiments, if part of driving control modules of the transportation means 130-1 fail, the takeover request message may only request a partial takeover of the driving control of the transportation means. In response to such a takeover request message, the driving control module 214 may provide a decision planning message 204, so that the transportation means 130-1 may drive according to the decision plan. Of course, in this case, the driving control module 214 may also provide a control message 206, to provide an overall control of the driving of the transportation means 130-1.

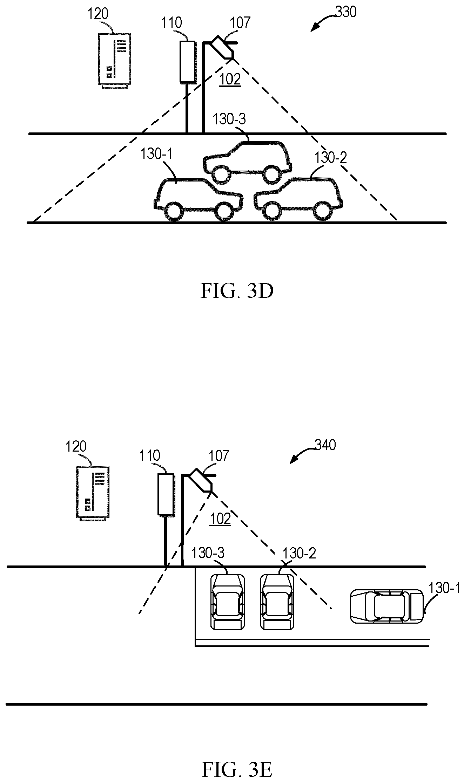

FIG. 3D further shows a coordinated driving control under an example scenario 330 of taking over a transportation means 130. In this scenario, the transportation means 130-1 is blocked by other surrounding transportation means 130-2 and 130-3 and cannot leave the predicament through a self-vehicle automatic driving decision. At this time, a vehicle-mounted subsystem 132 in the transportation means 130-1 may send a takeover request message to a roadside subsystem 112, to request a partial or full takeover of the driving control of the transportation means 130-1. In a case where it is determined to take over the driving control of the transportation means 130-1 partially or completely, the roadside subsystem 112 sends a takeover response message to the vehicle-mounted subsystem 132, to indicate whether the roadside takes over at least part of the driving control of the transportation means 130-1.

In some embodiments, a takeover request message indicates identification information of transportation means, travelling plan information of the transportation means, a reason for requesting takeover, and time information. The identification information of transportation means enables a roadside device 110 to identify and/or position the transportation means 130. The identification information may include, for example, an identification of a vehicle, such as a VIN code, a license plate number, and may further include a type, a size, descriptive information and location information of the vehicle, a description of surrounding objects, etc. The travelling plan information indicates a travelling plan of a transportation means 130, including but not limited to, a current travelling direction, a destination, a planned travelling route, and speed limit information (e.g., a maximum allowable speed and/or acceleration). The reason for requesting takeover may indicate, for example, a reason why a transportation means 130 requests a takeover, such as a self-vehicle failure, a specific demand (e.g., automatic parking), a failure of an automatic driving strategy. Some examples of the information contained in a takeover request message provided by a vehicle-mounted subsystem 132 to a roadside subsystem 112 are shown below in Table 6.

**Table 6. Takeover Request Message (OBU→RSU)**

| indication information | specific content | remarks |
|---|---|---|
| identification information of a transportation means | identification of a transportation means requesting a takeover | e.g., a VIN code, a license plate number, etc. |
| | type of a transportation means | |
| | geographical location of a transportation means | |
| description related to a target object | description of a target object identified by a transportation means | referring to some or all of information in descriptions related to target objects listed in Tables 1.1 to 1.4 |
| travelling plan information | travelling direction | a travelling direction, a destination, a planned travelling route, speed limit information (e.g., an allowable maximum speed and/or an acceleration) of a transportation means |
| | travelling destination | |
| | planned travelling route | |
| | travelling speed limit information | allowable maximum speed and/or acceleration |
| reason for takeover | reason for takeover | indicating a reason why the a transportation means requests a takeover, for example, a self-vehicle failure, a specific demand such as automatic parking, a failure of automatic travelling strategy, etc. |

In some embodiments, a takeover response message provided by a roadside subsystem 112 to a vehicle-mounted subsystem 132 indicates whether to take over at least partially the transportation means, and the start time of taking over the transportation means, as listed below in Table 7.1.

**Table 7.1 Takeover Response Message (RSU→OBU)**

| indication information | remarks |
|---|---|
| time information | a message sending moment |
| whether to take over a transportation means | taking over completely, partially, or not at all |
| start time of taking over a transportation means | takeover is started at indicated start time |

In case of determining at least partially taking over of the driving control of the transportation means 130-1, the driving control module 214 of the roadside subsystem 112 may thus provide a decision planning message 204 and/or a control message 206 to the transportation means 130-1 for driving control. In addition, through the perception information received from each of the perception information sources, the driving control module 214 determines that the smooth driving of the transportation means 130-1 requires a coordination with one or more other transportation means 130. For example, the driving control module 214 determines that the transportation means 130-1 cannot bypass a transportation means 130-2 to continue advancing, and the transportation means 130-2 is required to get out of the way for a certain space. Thus, the driving control module 214 further generates another decision planning message and/or another control message based on existing information. The RSU 212 then provides the generated decision planning message and/or control message to the transportation means 130-2. The transportation means 130-2 may perform a corresponding driving action according to the received message, so that the transportation means 130-1 is coordinated with to leave the current blocked state.

In an embodiment involving parking, a roadside subsystem 112 may send a perception message to the vehicle-mounted subsystem 132 to indicate specific information in a parking area. The perception message may indicate a description related to a target object in the parking area, a serial number of a parking spot, a geographical location of the parking spot, a description of the parking spot, etc. Some examples of such a perception message are listed below in Table 7.2.

**Table 7.2 Perception Message in Case of Parking (RSU→OBU)**

| indication information | remarks |
|---|---|
| time information | message sending moment |
| description related to a target object | referring to some or all of contents of descriptions related to target objects listed in Tables 1.1 to 1.4 |
| serial number of a parking spot | indicating a serial number of a parking spot |
| geographical location of parking spot | |
| description of a parking spot | indicating a size, corner point data, etc. of a parking spot to be used |

In an embodiment involving parking, a decision planning message sent by a roadside subsystem 112 may specifically indicate a specific driving decision or plan for a transportation means 130 in a parking area. Some examples of a decision planning message are given below in Table 7.3.

**Table 7.3 Decision Planning Message in Case of Parking (RSU→OBU)**

| indication information | specific content | remarks |
|---|---|---|
| time information | message sending moment | |
| identification information of a transportation means | | indicating a sign of a transportation means targeted by a decision planning message |
| decision information related to a driving behavior | a behavior-level decision for a transportation means | behaviors, for example, following a transportation means ahead, stopping, allowing right of way, turning left, turning right, etc. |
| decision information related to a driving action | an action-level decision | decision information, e.g., trajectory points of a route plan, time, a speed (it may form a clockwise angle with the |
| | | true north), an acceleration, an angle, etc. feedback control of a transportation means, including a throttle control, speeding up, braking, a steering wheel rotation and other actions |
| information related to a trajectory of a route plan | information of trajectory points of a route plan | it may be described with map data or longitude and latitude information |
| | expected time for arriving at trajectory points of a route plan | planning expected time for arriving at one or more trajectory points |
| | planned speed | planned speed of a transportation means |
| | planned angle | turning angle of a transportation means |

In some embodiments, a roadside device 110 or other traffic management nodes may also actively request or require the roadside device 110 to take over one or more transportation means 130, when it is detected a need of takeover or it is facing an emergency situation. In some embodiments, in response to a takeover request message or if the roadside subsystem 112 actively determines to take over the driving control of the transportation means 130 at least in part, a RSU 212 provides a takeover notification message to the transportation means 130. The takeover notification message indicates takeover related information, including but not limited to, one or more of takeover start time, takeover end time, a takeover type, a takeover reason, and a takeover strategy.

In some embodiments, the escape of a transportation means 130 may not depend on a roadside device 110 or a roadside subsystem 112, but may be assisted by an interaction between transportation means 130. Specifically, in the example of FIG. 3D, a transportation means 130-1 may send an escape request message to surrounding transportation means, such as transportation means 130-2 and 130-3. The request message may include, but is not limited to, identification information of the transportation means 130-1, a type of the transportation means 130-1, location information, traveling direction information, traveling route information, traveling speed information of the transportation means 130-1, and/or location information of the surrounding transportation means that affect the traveling of the transportation means 130-1.

The transportation means 130-2 and 130-3 may determine whether they will affect the transportation means 130-1 after receiving the escape request message. When determining that they may affect the transportation means 130-1, the transportation means 130-2 and 130-3 may adjust their own travelling plan strategies and give way to the transportation means 130-1, to assist the transportation means 130-1 in escaping. An escape response message of the transportation means 130-2 or 130-3 includes at least one of: identification information of the transportation means 130-2 or 130-3, an indication of whether the transportation means 130-2 or 130-3 gives way to the transportation means, a planned route of the transportation means 130-2 or 130-3, a planned speed of the transportation means 130-2 or 130-3, etc.

Some examples of information contained in an escape request message and in an escape response message are listed below in Tables 8 and 9, respectively.

**Table 8 Escape Request Message (OBU→OBU)**

| indication information | remarks |
|---|---|
| time information | message sending moment |
| identification information of a transportation means | to identify a transportation means which sends an escape request message, including identifiers such as a VIN code and a license plate number |
| type of a transportation means | |
| location information of a transportation means | |
| travelling direction information of a transportation means | |
| travelling route information of a transportation means | |
| travelling speed information of a transportation means | |
| location information of surrounding transportation means that affect the transportation means | |

**Table 9 Escape Response Message (OBU→OBU)**

| indication information | remarks |
|---|---|
| time information | message sending moment |
| identification information of a transportation means | to identify a transportation means which sends an escape response message, including identifiers such as a VIN code and a license plate number |
| whether to give way | indicating whether a transportation means will necessarily request a transportation means in an escape |
| planned route of a transportation means | a transportation means requesting an escape may perform corresponding escape strategy on this basis |
| planned speed of a transportation means | a transportation means requesting an escape may perform corresponding escape strategy on this basis |

### Example Scenario of Map Update

It is discussed above that a perception message 202 and/or a decision planning message 204 may include map information, because a vehicle-mounted subsystem 232 needs to guide the driving of a transportation means depending on a map, especially a high-precision map, in the environment when performing a specific driving control. As mentioned above, map information may indicate at least one of an identification of a map, an update mode of a map, an area of a map to be updated, and location information.

In some embodiments, a roadside subsystem 112 may broadcast, for example periodically, a map version message. The map version message includes map version information, a geographic location targeted by a map version, a map description, etc.

In some embodiments, a map update at the transportation means 130 may be that when a driving control module 234 on the vehicle side or a driving control module 214 on the roadside detects a map update need, and/or in response to a map update request from the transportation means 130, such as an OBU 232, a RSU 212 may make map information to be included in a generated perception message 202 and/or decision planning message 204. For example, the vehicle-mounted subsystem 132 may determine to request a map update after receiving a map version message. A map update request message may indicate time information, an identification of a transportation means 130, a type of a transportation means 130, descriptive information of a transportation means 130, location information of a transportation means 130, version information of a map, an area of a map which is requested to be updated, and an update mode of a map.

After receiving a map update request message, the roadside subsystem 112 sends map data to the transportation means 130 according to corresponding demand thereof. The map data may include a map version, a geographic location targeted by the map version, an area corresponding to the map data, an update mode corresponding to the map data, etc.

Some examples of contents contained in ta map version message, a map update message and map data are listed below in Tables 10.1, 10.2 and 10.3, respectively.

**Table 10.1 Map Version Message (RSU→OBU)**

| indication information | remarks |
|---|---|
| time information | message sending moment |
| geographic location information | geographic location targeted by a map version |
| map version information | version of a map |
| map description | description related to a map |

**Table 10.2 Map Update Request Message (OBU→RSU)**

| | | |
|---|---|---|
| indication information | specific content | remarks |
| time information | current moment | |
| identification information of a transportation means | identification | information capable of uniquely identifying a transportation means, for example, a VIN code, a license plate number, etc. |
| | type | indicating a basic type of a transportation means; types of transportation means may be classified according to different dimensions, e.g., transportation means classification standards, industry applications, power and/or driving modes; |
| | | when transportation means are described, there may be multiple dimensions of information |
| | geographical location | specific location of a transportation means |
| | descriptive information | description of a size (e.g., length, width, height), a color, corner point data, a center point, a ground clearance, etc., of a transportation means; |
| | | for example, the center point of a transportation means may be used as a reference to describe the length, width and height; or corner points may be used for description (corner point data may still be described with location information) |
| map version information | map version | indicating a version currently used by a transportation means |
| area of a map which is requested to be updated | geographical area | indicating a geographical area of a map to be updated |
| map update mode | indication of an update mode | an update mode of a map may indicate, for example, an update source (from a remote device or other external sources), an update link, update time, etc. of a map |

**Table 10.3 Map Data (RSU→OBU)**

| indication information | remarks |
|---|---|
| time information | message sending moment |
| geographic location information | geographic location targeted by a map version |
| map version information | version of a map |
| area corresponding to map data | |
| update mode corresponding to map data | |

Although some examples of the content contained in a map update request message are listed above, it should be understood that the map update request message may further include other content, including less or more content. In each communication, the map update request message provided from a vehicle-mounted subsystem 132 to a roadside subsystem 112 may be all or part of the above content in Tables 1.1-1.4, or it may include other content. During transmission, a map update request message or constituent elements therein may be, for example, data-compressed, to further reduce the amount of data transmitted between the roadside and the transportation means.

### Example scenario of traffic condition recognition

In some embodiments, when the travelling is in real road conditions, it is possible to better assist transportation means (such as vehicles) in route planning, if the traffic condition of the road section ahead is known in advance. A traffic condition recognition based on roadside perception means that in a mixed traffic environment, a roadside perception device and a vehicle-mounted perception device continuously perceive traffic information of surrounding roads, and after the traffic information is processed by a roadside subsystem, identify a traffic flow and a congestion condition of a current road section in real time, and send a recognition of the traffic condition as a perception message to transportation means, to assist the transportation means in making a correct decision control. For example, a vehicle-mounted subsystem may determine an optimum travelling route of a transportation means according to traffic condition information, to realize the safe and efficient travelling of the transportation means.

In some embodiments, a driving control module 214 of a roadside subsystem 112 generates a perception message, to make traffic condition information of a road where the transportation means is located to be included therein. The traffic condition information includes at least one of: a density of traffic participants on a road section of a road, an average speed of traffic participants on a road section, a lane level congestion condition description of a road section, a start location of a road section, and a duration of a current traffic condition. A perception message may be provided to a transportation means 130 through a broadcast by a RSU 212 of a roadside subsystem 112 or through other communication connection. Therefore, the vehicle-mounted subsystem 132 of a transportation means 130 may determine the travelling route and the control strategy of the transportation means 130 from the traffic condition information and other traffic information or perception results acquired by the vehicle-mounted subsystem 132. For example, if a vehicle-mounted subsystem 132 acquires from a roadside subsystem 112 that a road section ahead is congested, the travelling plan may be determined as changing the lane in advance, to avoid the congestion ahead.

In some embodiments, some examples of a perception message provided by a roadside subsystem 112 to a vehicle-mounted subsystem 132 are given below in Table 11.

**Table 11 Perception Message (Traffic Condition Information) (RSU→OBU)**

| indication information | remarks |
|---|---|
| density of traffic participants on a road section of a road | traffic participants include motor vehicles, non-motor vehicles, pedestrians, etc. |
| average speed of traffic participants on a road section | average speed of the same type of transportation means, especially motor vehicles may be calculated |
| start location of a road section | describing a start location of a road section targeted by current traffic condition information |
| end location of a road section | describing an end location of a road section targeted by current traffic condition information |
| lane level congestion condition description of a road section | when a road has a plurality of lanes, describing a congestion condition of each lane, including but not limited to, a density, a speed, a queue length, etc. of vehicles |
| duration of a current traffic condition | |
| sign of a road | |
| sign of a lane | |
| traffic event | events such as traffic accidents and road maintenance on a specific road or in a specific lane |

### Example Scenario of Remote Driving

In some embodiments, transportation means 130 having an automatic driving capability may be monitored in a running process based on remote information, and as needed, the transportation means may be remotely driven by a person or any other operator at a distal end. For example, when the transportation means is required to complete a complex task, due to the limitations in the aspects of perception and processing of the transportation means, it is necessary to manually perform an automatic remote driving at a distal end. In such an implementation, the transportation means 130 may support a switching between a remote driving and an automatic driving.

Generally, a remote actuation mechanism may be provided, to simulate an actuation mechanism for realizing a driving on a general transportation means. An actuation mechanism may include components in one or more systems, such as a power system, a transmission system, a brake system, a steering system, and a feedback system of the transportation means. Such a remote actuation mechanism may be implemented based on software, and for example operated by a driving simulator or a graphical interface. Such a remote actuation mechanism may also be partially or completely implemented by hardware. When the transportation means 130 enters a remote-control mode, a driving operation on a remote actuation mechanism is synchronized to a local actuation mechanism of the transportation means 130. That is to say, the driving operation on the transportation means 130 is initiated and controlled by the remote actuation mechanism, and it is mapped to the local actuation mechanism. An actuation operation on a remote actuation mechanism may be actuated, for example, by a person or any other operator. Such a remote control may be initiated, for example, when the transportation means 130 cannot perform a driving control by itself or it is in a stagnant state.

In some embodiments, if necessary, a remote actuation mechanism or a terminal device at the remote actuation mechanism may initiate a remote driving request message for the transportation means 130. The remote driving request message may indicate start time and/or end time and/or a start location and/or an end location of a remote driving, and the message further includes time information. The remote driving request message may be sent, for example, to a roadside device 110, such as a roadside subsystem 112. A RSU 212 of the roadside subsystem 112 may send the remote driving request message to an OBU 232 of a vehicle-mounted subsystem 132.

Upon reception of a permission or acknowledgement of a remote driving from the vehicle-mounted subsystem 132 of the transportation means 130, the roadside device 110 may initiate a control message 206 based on the remote driving. Specifically, the roadside subsystem 112 determines a remote actuation operation on the remote actuation mechanism associated with the transportation means 130, and may convert the remote actuation operation into the control message 206 based on parameters related to the local actuation mechanism of the transportation means 130, to control a local actuation mechanism to actuate a same operation as the remote actuation operation. The parameters related to the local actuation mechanism of the transportation means 130 may be obtained, for example, from storage means of the remote device 120 or directly from the vehicle-mounted subsystem 132.

In some embodiments, if it is determined that a remote driving is ended, the roadside subsystem 112 may provide an indication of the end of the remote driving to the vehicle-mounted subsystem 132 of the transportation means 130. At this time, the transportation means 130 returns to a normal driving mode.

### Example Scenario of Detection of Abnormal Moving Object

In a scenario of automatic driving, it is necessary to pay attention to various types of other objects in an environment where a transportation means is located, such as locations, motion states and other descriptions of those objects. In this way, the transportation means may be assisted in making a correct driving decision and control. According to embodiments of the present disclosure, in a case of a coordinated driving control, whether a target object is in an abnormal motion state is determined by an device outside the transportation means 130, such as a roadside device 110 or a vehicle-mounted subsystem 132 on other transportation means 130 based on perception information related to an environment 100, especially perception information related to a target object in the environment 100. If it is detected that there is a target object in an abnormal motion state, one or more of driving-related messages provided to the transportation means 130, such as a perception message 202, a decision planning message 204 and a control message 206, will indicate the abnormal motion state of the target object. Based on such a driving-related message, the driving of corresponding transportation means 130 may be controlled, so that the transportation means 130 travels on a motion trajectory not colliding with the target obj ect.

In the driving environment of the transportation means 130, such as on a travel road, target objects that may threaten the travelling safety of the transportation means 130 may include a target object constantly stationary, a target object conflicting with the moving direction of the transportation means 130, a target object significantly not matched with the moving speed of the transportation means 130, etc. In a real driving environment, there is usually a perception blind zone due to the occlusion of other objects, or a perception range of a transportation means itself is limited, so it may be difficult for a transportation means 130 itself to quickly, accurately and completely identify an abnormal target object in a mixed traffic environment. In some embodiments, the driving control of the transportation means 130 may be assisted by a perception capability and/or a computing capability of a roadside device 110 (e.g., a roadside subsystem 112) and other transportation means 130 (e.g., a vehicle-mounted subsystem 132), and the driving-related messages may be provided to the transportation means 130 to indicate the target objects in the abnormal motion state.

Concerned target objects may be various types of objects which may exist in an environment 100, especially objects on or near a travel road of a transportation means 130, such as various types of vehicles, persons, animals, and other objects.

In some embodiments, when determining whether a target object in an environment 100 is in an abnormal motion state, it may be desirable to detect objects in an abnormal stationary state. Herein, "abnormal stationary state" means being continuously stationary for a period of time, the period of time may be greater than a threshold. An abnormal stationary object, especially an object stopped on a road, needs to be timely and accurately notified to the driving control system of a travelling transportation means 130, to make a correct driving decision and control.

In one embodiment, it may be determined whether a target object is continuously stationary in a period of time based on a plurality of information sets related to a target object sensed at a plurality of time points in the period of time. Because it is necessary to obtain perception information within a period of time to determine the stationary state of a target object, the perception capability of a single transportation means 130 may be difficult to complete such a determination, thus, it is necessary to rely on the perception capability and/or the computing ability of the roadside or other transportation means.

The plurality of information sets at the plurality of time points may be partially or completely sensed by a roadside sensing device 107 and reported periodically, or may be partially or completely sensed by a vehicle-mounted sensing devices 236 on one or more other transportation means 130 passing by the stationary target object. In this case, if a vehicle-mounted subsystem 132 of a certain transportation means determines the motion state of a target object, the vehicle-mounted subsystem 132 may obtain a plurality of information sets at a plurality of time points from the roadside subsystem 112 or a remote device 120. By collecting information of the target object in a period of time, the roadside subsystem 112 or the related vehicle-mounted subsystem 132 may determine whether the target object is always stationary. If the target object is always stationary in a period of time, it may be determined that the target object is in an abnormal stationary state.

In one embodiment, a target object in an abnormal stationary state may be transportation means in an environment 100, such as vehicles parked on both sides of a road for a long time. Such a vehicle parked for a long time period is sometimes called "zombie vehicle". For such a vehicle, the period of time for determining the abnormal stationary state may be set to be a long time period, such as several weeks, several months, etc.

In one embodiment, after it is determined that a target object is in an abnormal stationary state, a roadside subsystem 112 or a vehicle-mounted subsystem 132 of other transportation means 130 may generate a perception message, which may include all or part of the contents listed in Tables 1.1 to 1.4. The generated perception message may include a description related to the target object, especially an abnormal stationary state of the target object. In some examples, vehicles (i.e., the target objects) having been in a stationary state for a long time period may also be particularly indicated as "zombie vehicles" in the perception message.

Alternatively or additionally, a roadside subsystem 112 or a vehicle-mounted subsystem 132 of other transportation means 130 may further generate a decision planning message or a control message for specific transportation means 130. The decision planning message or the control message may also indicate an abnormal stationary state of a target object, which may be realized by planning a travelling trajectory of the transportation means 130 or controlling the driving action of the transportation means 130 relative to the target object in the abnormal stationary state. Therefore, the transportation means 130 may be prevented from traveling on a motion trajectory that may collide with the stationary target object.

Specifically, in order to avoid a collision with a target object, a decision planning message or a control message may guide or control a moving direction, a moving speed, or an overall travelling route of a transportation means 130. For example, if it is determined that there is a target object in an abnormal stationary state in one lane of a road, the decision planning message or the control message may guide the transportation means 130 to change the lane in advance to travel on another lane, thereby avoiding a collision with the target object. In a case where no decision planning message or control message is obtained, the vehicle-mounted subsystem 132 of the transportation means 130 may also take information contained in a perception message received from the outside (e.g., the description related to the target object) as an input of a decision plan and/or a control, to determine how to plan and control a driving, such as controlling the moving direction, the speed and the route of the transportation means 130 to avoid a collision with the stationary target object.

In one embodiment, a roadside subsystem 112 or a vehicle-mounted subsystem 132 of other transportation means 130 may broadcast a generated perception message after determining a target object in an abnormal stationary state. A transportation means 130 within the communication range of the roadside subsystem 112 or the vehicle-mounted subsystem 132 of other transportation means 130 may receive such a perception message. In another embodiment, the decision planning message and/or the control message generated by the roadside subsystem 112 or the vehicle-mounted subsystem 132 of other transportation means 130 may be provided for specific transportation means 130, and thus may be transferred to the specific transportation means 130 through an established communication connection.

FIG. 3E shows an example scenario 340 in which a roadside subsystem 112 detects a target object in an abnormal stationary state in an environment 100. As illustrated in FIG. 3E, a roadside device 110 obtains perception information related to the environment, especially that related to transportation means 130-2 and 130-3 in the environment, from a roadside sensing device 107 and/or a vehicle-mounted sensing device 236 of the transportation means 130. For example, the roadside sensing device 107 may periodically detect perception information within a perception range 102 thereof and report to the roadside subsystem 112 (e.g., the RSU 212 therein). The roadside subsystem 112 (e.g., the RSU 212 therein) may also obtain perception information collected by the vehicle-mounted sensing device 236 from the vehicle-mounted subsystem 132 of other transportation means 130 passing by the transportation means 130-2 and 130-3. The roadside device 110 (e.g., the driving control module 214) may determine perception results from original perception information and record the perception results of the transportation means 130-2 and 130-3 at a plurality of time points, such as locations and speeds of the transportation means 130-2 and 130-3 at each of the time points.

If it is determined that the transportation means 130-2 and 130-3 are stationary in a period of time, the roadside subsystem 112 (e.g., the driving control module 214 therein) may determine that the transportation means 130-2 and 130-3 are in an abnormal stationary state, and may generate a driving-related message (e.g., a perception message, and/or a decision planning message and/or a control message for specific transportation means 130, such as the transportation means 130-1). The RSU 212 of the roadside subsystem 112 may broadcast the perception message, or send the decision planning message and/or the control message to the vehicle-mounted subsystem 132 of the specific transportation means 130-1. After receiving the driving-related message, the vehicle-mounted subsystem 132 of the transportation means 130-1 may fuse the driving-related message with a perception result detected by the transportation means 130-1, determine a travelling strategy of the transportation means 130-1, and transmit the travelling strategy to a line control system of the transportation means 130-1, to realize a real-time control of the transportation means 130-1. For example, when it is acquired that the transportation means 130-2 and 130-3 are in an abnormal stationary state, the transportation means 130-1 may be controlled to change the lane in advance, to travel on a lane not colliding with the transportation means 130-2 and 130-3.

In addition to a target object in an abnormal stationary state, there may also exist a target object in an abnormal moving state in an environment 100, for example, a target object that conflicts with the moving direction of a transportation means 130, a target object significantly not matched with the moving speed of the transportation means 130, etc. In a traffic environment, a target object in an abnormal moving state may threaten the travelling safety of a transportation means 130, so it is necessary to detect such a target object in time, in order to make a correct travelling decision and control for the transportation means 130. The determination of a target object in an abnormal moving state may also be performed by a roadside subsystem 212 or a vehicle-mounted subsystem 132 of certain transportation means 130.

In some embodiments, when determining whether a target object is in an abnormal motion state, a movement of the target object, including at least a moving direction and/or a moving speed, may further be determined from perception information related to the target object. In addition, obtained perception information further includes perception information related to a reference object in the environment 100, for determining a movement of the reference object, including at least a moving direction and/or a moving speed. A reference object is usually selected as an object having a high probability in a normal moving state, such as the transportation means 130 in the environment 100. The selection of the reference object depends on the motion state of a target object to be determined, which will be described below. By comparing the movement of a target object with that of a reference object, it may be determined whether the target object is in an abnormal moving state.

An abnormal moving state may include: a retrograde state, i.e., the moving direction of a target object is different from those of most objects in an environment, or does not conform to the moving direction stipulated by a traffic rule; an abnormal speed state, i.e., a difference between the moving speed of a target object and that of a reference object is too large (e.g., exceeding a speed difference threshold). An abnormal speed state may be further divided into an abnormal slow state in which the moving speed of a target object is higher than that of a reference object, and an abnormal fast state in which the moving speed of a target object is lower than that of a reference object.

In one embodiment, when determining whether a target object is in a retrograde state, the moving direction of the target object may be compared with that of a reference object. In some examples, reference object may be selected as an object on a same traffic lane as the target object, and for example, the target object is a target transportation means, while the reference object is selected as reference transportation means on a same traffic lane as the target transportation means (sometimes the reference object in this case is also referred to as a "first reference object"). Herein, a traffic lane refers to a strip road section which enables a transportation means to be arranged longitudinally and travel safely, and which may be composed of one or more lanes. A travel road may have a one-way lane where transportation means all travel in substantially a same direction. A travel road may also have a two-way lane where transportation means on the two lanes travel in different directions. If the moving direction of a target object is detected as being opposite to that of a reference object, it may be determined that the target object is in a retrograde state. In order to accurately detect whether a target object is in a retrograde state, the reference object may be an object with a high confidence and in a correct travelling direction.

In one embodiment, when determining whether a target object is in an abnormal speed state, the moving speed of the target object is compared with that of a reference object. In some examples, a reference object for determining a speed abnormality may be an object having a same expected moving direction as the target object. For example, the reference object and the target object may be reference transportation means and target transportation means on traffic lanes of a same direction. The reference object in this case is sometimes referred to as a "second reference object".

If a difference between the moving speed of a target object and that of a reference object is determined as exceeding a speed difference threshold, it is determined that the target object is in an abnormal speed state. The speed difference threshold may be set according to relevant traffic rules of roads, or may be set based on a safe distance between objects (especially the transportation means). A reference object may be selected as an object having a high probability in a normal moving state or a stationary state, such as the transportation means 130 on a same traffic lane as target transportation means (the target object) in an environment 100. In a case where the speed difference between a target object and a reference object exceeds a speed difference threshold, if the moving speed of the target object is determined as being higher than that of the reference object, it may be determined that the target object is in an abnormal slow state. Otherwise, if the moving speed of the target object is lower than that of the reference object, it may be determined that the target object is in an abnormal fast state. On some roads, traveling speeds of transportation means need to meet specific speed requirements, and those exceeding a specified upper speed limit or lower speed limit may threaten the safety of other transportation means. In addition, in a moving state, if the speed difference between a transportation means and other transportation means or objects is too large, it is necessary to specially plan and control the driving operation (e.g., deceleration, acceleration, turning, changing the travelling route, etc.) to avoid a collision.

In one embodiment, a roadside subsystem 112 or a vehicle-mounted subsystem 132 of other transportation means 130 may generate a perception message after determining a target object in an abnormal moving state. The perception message may include a description related to a target object, especially descriptions of an abnormal moving state and other aspects of the target object, such as all or part of the contents listed in Tables 1.1 to 1.4. In some embodiments, the description related to the target object, such as the moving state of the target object in Table 1.1, may also indicate the specific abnormal moving state of the target object, such as a retrograde state, an abnormal slow state, an abnormal fast state, etc.

Alternatively or additionally, a roadside subsystem 112 or a vehicle-mounted subsystem 132 of other transportation means 130 may further generate a decision planning message or a control message for specific transportation means 130. The decision planning message or the control message may also indicate an abnormal motion state of a target object. This may be achieved by planning the travelling trajectory of the transportation means 130 or controlling the driving action of the transportation means 130 relative to the target object in an abnormal moving state. Therefore, the transportation means 130 may be prevented from traveling on a motion trajectory that may collide with the target object that is moving abnormally.

Specifically, in order to avoid a collision with a target object, a decision planning message or a control message may guide or control the moving direction, the moving speed, or the overall travelling route of the transportation means 130. For example, if it is determined that there is a target object in a retrograde state in one lane of the road, the decision plan message or the control message may guide the transportation means 130 to avoid changing to or from that lane. For another example, if it is determined that there is a target object in an abnormal slow state in front of the transportation means 130 on a same lane, the decision planning message or the control message may guide the transportation means 130 to perform operations such as deceleration and/or lane change to avoid a collision. Or, if there is a target object in an abnormal fast state behind the transportation means 130 on a same lane, the decision planning message or the control message may guide the transportation means 130 to perform operations such as acceleration and/or lane change.

In one embodiment, a roadside subsystem 112 or a vehicle-mounted subsystem 132 of other transportation means 130 may broadcast a generated perception message after determining a target object in an abnormal moving state. A transportation means 130 within the communication range of a roadside subsystem 112 or a vehicle-mounted subsystem 132 of other transportation means 130 may receive such a perception message. In another embodiment, a decision planning message and/or a control message generated by a roadside subsystem 112 or a vehicle-mounted subsystem 132 of other transportation means 130 may be specific for specific transportation means 130, and thus may be transferred to the specific transportation means 130 through an established communication connection.

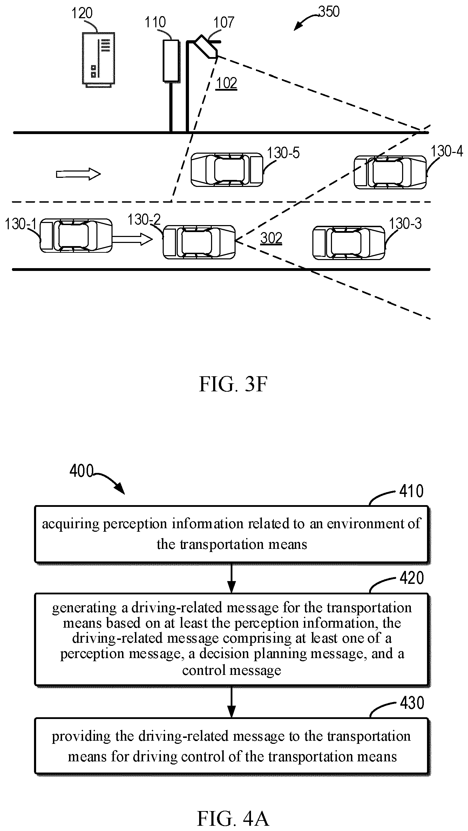

FIG. 3F shows an example scenario 350 in which a roadside subsystem 112 detects a target object in an abnormal stationary state in an environment 100. In this scenario, transportation means 130-1 to 130-5 are traveling on traffic lanes of a same direction. A roadside sensing device 107 and/or a vehicle-mounted sensing device 236 of the transportation means 130 obtain perception information within respective perception ranges 102 and 302, especially perception information related to each of the transportation means therein. The roadside sensing device 107 and the vehicle-mounted sensing device 236 may transfer the perception information to the roadside subsystem 112 or a vehicle-mounted subsystem 132 of certain transportation means 130.

The roadside subsystem 112 or the vehicle-mounted subsystem 132 (e.g., the driving control module 214 or the driving control 234) may determine that the moving direction of the transportation means 130-3 is different from (opposite to) that of other transportation means (e.g., transportation means 130-5 or transportation means 130-3) on the traffic lane based on the perception information, and thus determine that the transportation means 130-3 is in a retrograde state. The roadside subsystem 112 or the vehicle-mounted subsystem 132 (e.g., the RSU 212 or the RSU 232) may broadcast the perception message, or may send a decision planning message and/or a control message to a vehicle-mounted subsystem 132 of specific transportation means 130-1, to indicate the transportation means 130-3 in a retrograde state. After receiving the driving-related message, the vehicle-mounted subsystem 132 of the transportation means 130-3 may fuse the driving-related message with the perception result detected by the transportation means 130-1, and determine a travelling strategy of the transportation means 130-3, so that the line control system of the transportation means 130-3 may be controlled to travel according to the travelling strategy. For example, the transportation means 130-1 may be controlled not to change to the lane where the retrograde transportation means 130-4 is located.

In some cases, a roadside subsystem 112 or a vehicle-mounted subsystem 132 of the transportation means 130-2 (e.g., the driving control module 214 or the driving control 234) may determine that the moving speed of the transportation means 130-3 is lower than that of the transportation means 130-2 based on perception information, and the difference therebetween is too large (greater than a speed difference threshold), and thus it may be determined that the transportation means 130-3 is in an abnormal slow state. The roadside subsystem 112 or the vehicle-mounted subsystem 132 (e.g., the RSU 212 or the RSU 232) may broadcast the perception message, or may send a decision planning message and/or a control message to a vehicle-mounted subsystem 132 of specific transportation means 130-1, to indicate that the transportation means 130-3 is in an abnormal slow state. After receiving the driving-related message, the vehicle-mounted subsystem 132 of the transportation means 130-3 may fuse the driving-related message with the perception result detected by the transportation means 130-1, and determine a travelling strategy of the transportation means 130-3, so that the line control system of the transportation means 130-3 may be controlled to travel according to the travelling strategy. For example, the transportation means 130-1 may be controlled to decrease the speed and/or change the lane in advance.

### Example Method

FIG. 4A shows a flowchart of a driving control assisting method 400 according to an embodiment of the present disclosure. The method 400 may be implemented at the roadside subsystem 112 in FIG. 1 and FIG. 2. It should be understood that although shown in a specific order, some steps in the method 400 may be performed in a different order than that shown or in a parallel manner. Embodiments of the present disclosure are not limited in this respect.

At 410, perception information related to an environment of the transportation means is acquired, the perception information includes at least information related to an object present in the environment. At 420, a driving-related message for the transportation means is generated based on at least the perception information, the driving-related message includes at least one of perception messages, a decision planning message, and a control message. At 430, the driving-related message is provided to the transportation means for driving control of the transportation means.

In some embodiments, acquiring the perception information includes acquiring at least one of: roadside perception information sensed by a sensing device which is arranged in the environment and independent of the transportation means; transportation means perception information sensed by a sensing device arranged in association with the transportation means; and transportation means perception information sensed by a sensing device arranged in association with another transportation means.

In some embodiments, the perception message includes at least one of: a description related to a target object present in the environment, for indicating at least one of a type, location information, speed information, direction information, physical appearance descriptive information, a historical trajectory, and a predicted trajectory of the target object; information related to a physical condition of a road in the environment, for indicating at least one of a road surface physical condition of the road and structured information of the road; information related to a traffic facility in the environment, for indicating at least one of a state of a signal light and a traffic sign on the road; information of a road traffic condition in the environment, for indicating at least one of a sign, traffic flow and a traffic event on the road and/or in a lane of the road; information related to a weather condition in the environment; auxiliary information related to positioning of the transportation means; diagnosis information of a failure of the transportation means; information related to an OTA upgrade of a software system of the transportation means; map information, indicating at least one of an identification of a map, an update mode of the map, an area of the map to be updated and location information; information related to a parking area of the transportation means; and time information.

In some embodiments, the decision planning message includes at least one of: an indication of a travel road on which a decision is to be applied, start time information and/or end time information of a decision plan, start location information and/or end location information of the decision plan, an identification of a transportation means targeted by the decision plan, decision information related to a driving behavior of the transportation means, decision information related to a driving action of the transportation means, information of a path planning trajectory point, expected time for arriving at the path planning trajectory point, information related to other transportation means involved in the decision plan, map information, indicating at least one of an identification of a map, an update mode of the map, an area of the map to be updated and location information, and time information.

In some embodiments, the control message includes at least one of: kinematic control information related to a motion of the transportation means, kinetic control information related to at least one of a power system, a transmission system, a brake system, and a steering system of the transportation means, control information related to a ride experience of a passenger in the transportation means, control information related to a traffic warning system of the transportation means, and time information.

In some embodiments, generating the driving-related message includes: generating at least one of the perception message and the decision plan message including map information used by the transportation means, in response to detecting that the map information is to be updated and/or in response to acquiring a map update request message from the transportation means, wherein the map update request message indicates at least one of time information, identification information of the transportation means, an area of a map to be updated, and an update mode of the map.

In some embodiments, generating the driving-related message further includes: acquiring at least one of real-time running information, auxiliary plan information and vehicle body information of the transportation means, and special transportation means indication information, and generating at least one of the decision planning message and the control message based on the acquired information.

In some embodiments, the real-time running information includes at least one of location information, traveling direction information, traveling route information, traveling speed information, operation state information, and component state information of the transportation means. In some embodiments, the auxiliary planning information includes at least one of an indication of traveling intention, planned traveling route information, and speed limit information of the transportation means. In some embodiments, the vehicle body information includes at least one of an identification, a type, descriptive information, current traveling route information, and failure-related information of the transportation means. In some embodiments, the special transportation means indication information includes at least one of a special transportation means type and a right-of-way requirement level.

In some embodiments, providing the driving-related message includes: providing the driving-related message to the transportation means, in response to at least one of a time-based trigger, a location-based trigger, and an event-based trigger.

In some embodiments, providing the driving-related message includes: receiving a takeover request message for the transportation means, the takeover request message indicating a request for at least partially taking over the driving control of the transportation means; and providing at least one of the decision planning message, and the control message to the transportation means, in response to the takeover request message.

In some embodiments, the takeover request message indicates at least one of identification information of the transportation means, travelling plan information of the transportation means, a reason for requesting takeover, and time information.

In some embodiments, the method 400 further includes: providing a takeover notification message to the transportation means, in response to determining that the driving control of the transportation means is to be at least partially taken over, the takeover notification message indicating at least one of start time of the takeover, end time of the takeover, a type of the takeover, a reason of the takeover, and a strategy of the takeover.

In some embodiments, the method 400 further includes: generating at least one of another decision planning message and another control message based on the perception information, in response to determining that the driving control of the transportation means requires an assistance of another transportation means; and providing at least one of the generated another decision planning message and the generated another control message to the other transportation means for driving control of the other transportation means.

In some embodiments, generating the driving-related message includes: determining a remote execution operation on a remote execution mechanism associated with the transportation means; converting the remote execution operation into the control message further based on a parameter related to a local execution mechanism of the transportation means, to control the local execution mechanism to execute a same operation as the remote execution operation.

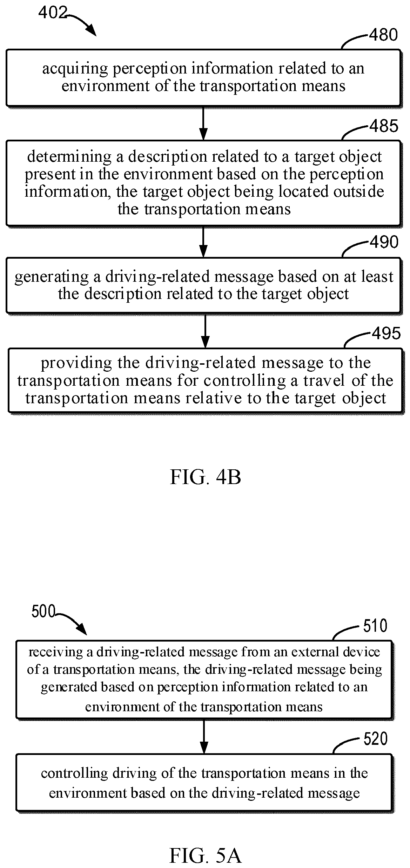

FIG. 4B is a flowchart showing a driving control assisting method 402 according to embodiments of the present disclosure. The method 402 may be implemented at the roadside subsystem 112 in FIG. 1 and FIG. 2. It should be understood that although shown in a specific order, some steps in the method 402 may be performed in a different order than that shown or in a parallel manner. Embodiments of the present disclosure are not limited in this respect.

At block 480, perception information related to an environment of a transportation means is acquired. At block 485, a description related to a target object present in the environment is determined based on the perception information, the target object being located outside the transportation means. At block 490, a driving-related message is generated based on at least the description related to the target object, the driving-related message including at least one of a perception message, a decision planning message, and a control message. At block 495, the driving-related message is provided to the transportation means for controlling a travel of the transportation means relative to the target object.

In some embodiments, acquiring the perception information includes acquiring at least one of: roadside perception information sensed by a sensing device which is arranged in the environment and independent of the transportation means; transportation means perception information sensed by a sensing device arranged in association with the transportation means; and transportation means perception information sensed by a sensing device arranged in association with another transportation means.

In some embodiments, generating the driving-related message includes: generating the perception message, to include at least the description related to the target object, including at least one of a classification, a motion state, retention time of the motion state, physical appearance descriptive information, a type, location information, a moving speed, a moving direction, an acceleration, an acceleration direction, historical motion trajectory information, and predicted motion trajectory information of the target object.

In some embodiments, generating the driving-related message further includes: generating the perception message to include traffic condition information of a road on which the transportation means is located, the traffic condition information including at least one of: a density of traffic participants on a road section of the road, an average speed of the traffic participants on the road section, a lane level congestion condition description of the road section, a start location of the road section, and a duration of a current traffic condition.

In some embodiments, the driving-related message is specific to a lane in the environment, and providing the driving-related message to the transportation means includes: broadcasting the driving-related message, to enable the transportation means in the lane to obtain the driving-related message, or sending the driving-related message to the transportation means, in response to determining that the transportation means is in the lane.

In some embodiments, the driving-related message includes the decision planning message, the decision planning message including at least one of: an identification of the lane, right-of-way information of the lane, start time for a control of the transportation means, and a start location for the control of the transportation means.

In some embodiments, the driving-related message is specific to the transportation means.

In some embodiments, providing the driving-related message includes: receiving a takeover request message for the transportation means, the takeover request message indicating a request for at least partially taking over the driving control of the transportation means; providing a takeover response message to the transportation means, to indicate whether to at least partially take over the driving control of the transportation means; and providing at least one of the decision planning message, and the control message to the transportation means, in response to determining to at least partially take over the driving control of the transportation means.

In some embodiments, the takeover request message indicates at least one of: identification information of the transportation means, a type of the transportation means, location information of the transportation means, travelling plan information of the transportation means, a reason for requesting takeover, and time information, wherein the travelling plan information includes at least one of: a travelling direction, a travelling destination, a planned travelling route, an allowable maximum speed and an allowable maximum acceleration of the transportation means. In some embodiments, the takeover response message indicates at least one of: whether to at least partially take over the transportation means, and start time for taking over the transportation means.

FIG. 5A is a flowchart showing a method 500 for driving control according to an embodiment of the present disclosure. The method 500 may be implemented at a vehicle-mounted subsystem 132 in FIG. 1 and FIG. 2. It should be understood that although shown in a specific order, some steps in the method 500 may be performed in a different order than that shown or in a parallel manner. Embodiments of the present disclosure are not limited in this respect.

At 510, a driving-related message is received from an external device of the transportation means, the driving-related message being generated based on perception information related to an environment of the transportation means, and including at least one of a perception message, a decision planning message, and a control message. At 520, driving of the transportation means in the environment is controlled based on the driving-related message.

In some embodiments, the method 500 further includes: providing, to the external device, transportation means perception information sensed by a sensing device arranged in association with the transportation means as at least a part of the perception information.

In some embodiments, the method 500 further includes: providing, to the external device, at least one of real-time running information, auxiliary planning information and vehicle body information of the transportation means, and special transportation means indication information, for a generation of at least one of the decision planning message and the control message.

In some embodiments, receiving the driving-related message includes: providing, to the external device, a takeover request message for the transportation means, the takeover request message indicating a request for at least partially taking over the driving control of the transportation means; and receiving at least one of the decision planning message, and the control message, in response to the takeover request message. In some embodiments, the takeover request message indicates at least one of identification information of the transportation means, travelling plan information of the transportation means, a reason for requesting takeover, and time information.

In some embodiments, the method 500 further includes: receiving a takeover notification message for the takeover request message from the external device, the takeover notification message indicating at least one of start time of the takeover, end time of the takeover, a type of the takeover, a reason of the takeover, and a strategy of the takeover.

In some embodiments, receiving the driving-related message includes: providing, to the external device, a remote driving request message for the transportation means; and receiving the control message in response to the remote driving request message, the control message including a control instruction executable by a local execution mechanism of the transportation means, and the control message being obtained by performing a conversion of an execution operation on a remote execution mechanism based on a parameter related to the local execution mechanism.

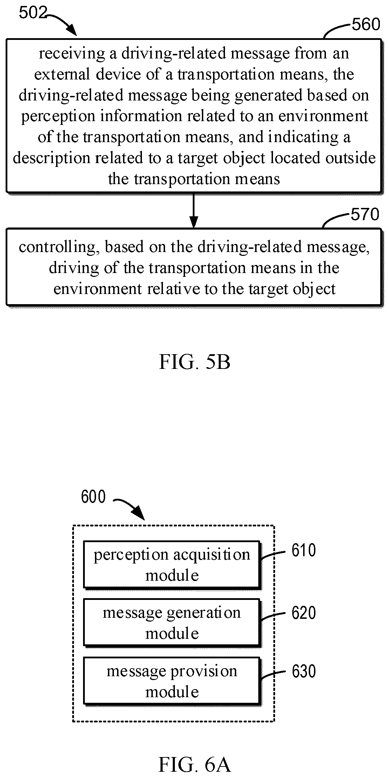

FIG. 5B is a flowchart showing a method 502 for driving control according to an embodiment of the present disclosure. The method 502 may be implemented at a vehicle-mounted subsystem 132 in FIG. 1 and FIG. 2. It should be understood that although shown in a specific order, some steps in the method 502 may be performed in a different order than that shown or in a parallel manner. Embodiments of the present disclosure are not limited in this respect.

At block 560, a driving-related message is received from an external device of a transportation means, the driving-related message being generated based on perception information related to an environment of the transportation means, and indicating a description related to a target object located outside the transportation means, and the driving-related message including at least one of a perception message, a decision planning message, and a control message. At block 570, based on the driving-related message, driving of the transportation means in the environment is controlled relative to the target object.

In some embodiments, the perception information includes at least one of: roadside perception information sensed by a sensing device which is arranged in the environment and independent of the transportation means; transportation means perception information sensed by a sensing device arranged in association with the transportation means; and transportation means perception information sensed by a sensing device arranged in association with another transportation means.

In some embodiments, receiving the driving-related message includes: receiving the perception message, to include at least the description related to the target object, including at least one of a classification, a motion state, retention time of the motion state, physical appearance descriptive information, a type, location information, a moving speed, a moving direction, an acceleration, an acceleration direction, historical motion trajectory information, and predicted motion trajectory information of the target object.

In some embodiments, receiving the driving-related message further includes: receiving the perception message to include traffic condition information of a road on which the transportation means is located, the traffic condition information including at least one of: a density of traffic participants on a road section of the road, an average speed of the traffic participants on the road section, a lane level congestion condition description of the road section, a start location of the road section, and a duration of a current traffic condition.

In some embodiments, the driving-related message is specific to a lane in which the transportation means is located, and the driving-related message includes the decision planning message, the decision planning message including at least one of: an identification of the lane, right-of-way information of the lane, start time for a control of the transportation means, and a start location for the control of the transportation means.

In some embodiments, the driving-related message is specific to the transportation means.

In some embodiments, the method 502 further includes: sending an escape request message to at least another transportation means, the escape request message including at least one of: identification information of the transportation means, a type of the transportation means, location information of the transportation means, travelling direction information, travelling route information, travelling speed information, and location information of a surrounding transportation means which affects a travel of the transportation means; and receiving an escape response message from the another transportation means, the escape response message including at least one of: identification information of the another transportation means, an indication of whether the another transportation means avoids the transportation means, a planned route of the another transportation means, and a planned speed of the another transportation means.

In some embodiments, the method 502 further includes: providing another perception message to an on-board subsystem associated with another transportation means, the perception message including a description of another target object in the environment, and the perception message including at least one of a classification, a motion state, retention time of the motion state, physical appearance descriptive information, a type, location information, a moving speed, a moving direction, an acceleration, an acceleration direction, historical motion trajectory information, and predicted motion trajectory information of the another target object.

In some embodiments, receiving the driving-related message includes: providing a takeover request message for the transportation means to the external device, the takeover request message indicating a request for at least partially taking over the driving control of the transportation means; receiving at least one of the decision planning message and the control message, in response to the takeover request message; and wherein the takeover request message indicates at least one of: the takeover request message indicates at least one of: identification information of the transportation means, a type of the transportation means, location information of the transportation means, travelling plan information of the transportation means, a reason for requesting takeover, and time information, wherein the travelling plan information includes at least one of: a travelling direction, a travelling destination, a planned travelling route, an allowable maximum speed and an allowable maximum acceleration of the transportation means.

### Example Apparatus and Device

FIG. 6A is a schematic block diagram showing a driving control assisting apparatus 600 according to an embodiment of the present disclosure. The apparatus 600 may be included in a roadside subsystem 112 in FIG. 1 and FIG. 2 or implemented as a roadside subsystem 112. As shown in FIG. 6A, the apparatus 600 includes a perception acquisition module 610, configured to acquire, by an external device of a transportation means, perception information related to an environment of transportation means, the perception information including at least information related to an object present in the environment; a message generation module 620, configured to generate a driving-related message for the transportation means based on at least the perception information, the driving-related message including at least one of a perception message, a decision planning message, and a control message; and a message provision module 630, configured to provide the driving-related message to the transportation means for driving control of the transportation means.

In some embodiments, the perception acquisition module is configured to acquire at least one of: roadside perception information sensed by a sensing device which is arranged in the environment and independent of the transportation means; transportation means perception information sensed by a sensing device arranged in association with the transportation means; and transportation means perception information sensed by a sensing device arranged in association with another transportation means.

In some embodiments, the message generation module includes: a map update-based message generation module, configured to generate at least one of the perception message and the decision planning message including map information, in response to detecting that the map information is to be updated and/or in response to acquiring a map update request message from the transportation means. In some embodiments, the map update request message indicates at least one of: time information, identification information of the transportation means, an area of a map to be updated, and an update mode of the map.

In some embodiments, the message generation module further includes: an auxiliary information acquisition module, configured to acquire at least one of real-time running information, auxiliary planning information and vehicle body information of the transportation means, and special transportation means indication information; and an auxiliary information-based message generation module configured to further generate at least one of the decision planning message and the control message based on the acquired information.

In some embodiments, the message provision module is configured as: a trigger-based message provision module configured to provide the driving-related message to the transportation means, in response to at least one of a time-based trigger, a location-based trigger, and an event-based trigger.

In some embodiments, the message provision module includes: a takeover request receiving module, configured to receive a takeover request message for the transportation means, the takeover request message indicating a request for at least partially taking over the driving control of the transportation means; and a takeover request-based message provision module, configured to provide at least one of the decision planning message, and the control message to the transportation means, in response to the takeover request message.

In some embodiments, the apparatus 600 further includes: a notification provision module, configured to provide a takeover notification message to the transportation means, in response to determining that the driving control of the transportation means is to be at least partially taken over, the takeover notification message indicating at least one of: start time of the takeover, end time of the takeover, a type of the takeover, a reason of the takeover, and a strategy of the takeover.

In some embodiments, the apparatus 600 further includes: another message generation module, configured to generate at least one of another decision planning message and another control message based on the perception information, in response to determining that the driving control of the transportation means requires an assistance of another transportation means; and another message provision module, configured to provide at least one of the generated another decision planning message and the generated another control message to the other transportation means for driving control of the other transportation means.

In some embodiments, the message generation module includes: an operation determination module, configured to determine a remote execution operation on a remote execution mechanism associated with the transportation means; a conversion-based message generation module, configured to convert the remote execution operation into the control message further based on a parameter related to a local execution mechanism of the transportation means, to control the local execution mechanism to execute a same operation as the remote execution operation.

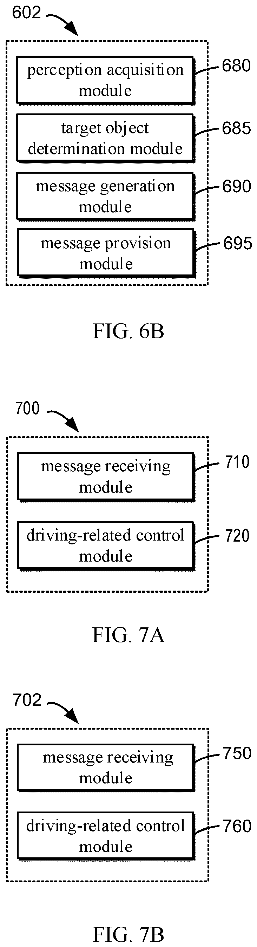

FIG. 6B is a schematic block diagram showing a driving control assisting apparatus 602 according to an embodiment of the present disclosure. The apparatus 602 may be included in a roadside subsystem 112 in FIG. 1 and FIG.2 or implemented as a roadside subsystem 112. As shown in FIG. 6B, the apparatus 602 includes: a perception acquisition module 680, configured to acquire, by an external device of a transportation means, perception information related to an environment of the transportation means; a target object determination module 685, configured to determine a description related to a target object present in the environment based on the perception information, the target object being located outside the transportation means; a message generation module 690, configured to generate a driving-related message based on at least the description related to the target object, the driving-related message including at least one of a perception message, a decision planning message, and a control message; and a message provision module 695, configured to provide the driving-related message to the transportation means for controlling a travel of the transportation means relative to the target object.

In some embodiments, the perception acquisition module is configured to acquire at least one of: roadside perception information sensed by a sensing device which is arranged in the environment and independent of the transportation means; transportation means perception information sensed by a sensing device arranged in association with the transportation means; and transportation means perception information sensed by a sensing device arranged in association with another transportation means.

In some embodiments, the message generation module includes: a first perception message generation module, configured to generate the perception message, to include at least the description related to the target object, including at least one of a classification, a motion state, retention time of the motion state, physical appearance descriptive information, a type, location information, a moving speed, a moving direction, an acceleration, an acceleration direction, historical motion trajectory information, and predicted motion trajectory information of the target object.

In some embodiments, the message generation module includes: a second perception message generation module, configured to generate the perception message to include traffic condition information of a road on which the transportation means is located, the traffic condition information including at least one of: a density of traffic participants on a road section of the road, an average speed of the traffic participants on the road section, a lane level congestion condition description of the road section, a start location of the road section, and a duration of a current traffic condition.

In some embodiments, a lane in the environment, and the message provision module includes: a message broadcasting module, configured to broadcast the driving-related message, to enable the transportation means in the lane to obtain the driving-related message; or a message sending module, configured to send the driving-related message to the transportation means, in response to determining that the transportation means is in the lane.

In some embodiments, the driving-related message includes the decision planning message, the decision planning message including at least one of: an identification of the lane, right-of-way information of the lane, start time for a control of the transportation means, and a start location for the control of the transportation means.

In some embodiments, the driving-related message is specific to the transportation means.

In some embodiments, the message provision module includes: a request receiving module, configured to receive a takeover request message for the transportation means, the takeover request message indicating a request for at least partially taking over the driving control of the transportation means; a response provision module, configured to provide a takeover response message to the transportation means, to indicate whether to at least partially take over the driving control of the transportation means; and a decision plan and/or control message provision module, configured to provide at least one of the decision planning message, and the control message to the transportation means, in response to determining to at least partially take over the driving control of the transportation means.

In some embodiments, the takeover request message indicates at least one of: identification information of the transportation means, a type of the transportation means, location information of the transportation means, travelling plan information of the transportation means, a reason for requesting takeover, and time information, wherein the travelling plan information includes at least one of: a travelling direction, a travelling destination, a planned travelling route, an allowable maximum speed and an allowable maximum acceleration of the transportation means. In some embodiments, the takeover response message indicates at least one of: whether to at least partially take over the transportation means, and start time for taking over the transportation means.

FIG. 7A is a schematic block diagram showing an apparatus 700 for driving control according to an embodiment of the present disclosure. The apparatus 700 may be included in a vehicle-mounted subsystem 132 in FIG. 1 and FIG. 2 or implemented as a vehicle-mounted subsystem 132. As shown in FIG. 7A, the apparatus 700 includes a message receiving module 710, configured to receive a driving-related message from an external device of a transportation means, the driving-related message being generated based on perception information related to an environment of the transportation means, and including at least one of a perception message, a decision planning message, and a control message; and a driving-related control module 720, configured to control driving of the transportation means in the environment based on the driving-related message.

In some embodiments, the apparatus 700 further includes a perception provision module, configured to provide, to the external device, transportation means perception information sensed by a sensing device arranged in association with the transportation means as at least a part of the perception information.

In some embodiments, the apparatus 700 further includes an auxiliary information provision module, configured to provide, to the external device, at least one of real-time running information, auxiliary planning information and vehicle body information of the transportation means, and special transportation means indication information, for a generation of at least one of the decision planning message and the control message.

In some embodiments, the message receiving module includes: a takeover request provision module, configured to provide, to the external device, a takeover request message for the transportation means, the takeover request message indicating a request for at least partially taking over the driving control of the transportation means; and a takeover-based message receiving module, configured to receive at least one of the decision planning message, and the control message, in response to the takeover request message. The takeover request message indicates at least one of identification information of the transportation means, travelling plan information of the transportation means, a reason for requesting takeover, and time information.

In some embodiments, the apparatus 700 further includes a notification receiving module, configured to receive a takeover notification message for the takeover request message from the external device, the takeover notification message indicating at least one of start time of the takeover, end time of the takeover, a type of the takeover, a reason of the takeover, and a strategy of the takeover.

In some embodiments, receiving the driving-related message further includes: a remote driving request module, configured to provide, to the external device, a remote driving request message for the transportation means; and a control message receiving module, configured to receive the control message in response to the remote driving request message, the control message including a control instruction executable by a local execution mechanism of the transportation means, and the control message being obtained by performing a conversion of an execution operation on a remote execution mechanism based on a parameter related to the local execution mechanism.

FIG. 7B is a schematic block diagram showing an apparatus 702 for driving control according to an embodiment of the present disclosure. The apparatus 702 may be included in a roadside subsystem 112 in FIG. 1 and FIG.2 or implemented as a roadside subsystem 112. As shown in FIG. 7B, the apparatus 702 includes: a message receiving module 750, configured to receive a driving-related message from an external device of a transportation means, the driving-related message being generated based on perception information related to an environment of the transportation means, and indicating a description related to a target object located outside the transportation means, and the driving-related message including at least one of a perception message, a decision planning message, and a control message; and a driving control module 760, configured to control, based on the driving-related message, driving of the transportation means in the environment relative to the target object.

In some embodiments, the perception information includes at least one of: roadside perception information sensed by a sensing device which is arranged in the environment and independent of the transportation means; transportation means perception information sensed by a sensing device arranged in association with the transportation means; and transportation means perception information sensed by a sensing device arranged in association with another transportation means.

In some embodiments, the message receiving module includes: a first perception message receiving module, configured to receive the perception message, to include at least the description related to the target object, including at least one of a classification, a motion state, retention time of the motion state, physical appearance descriptive information, a type, location information, a moving speed, a moving direction, an acceleration, an acceleration direction, historical motion trajectory information, and predicted motion trajectory information of the target object.

In some embodiments, the message receiving module includes: a second perception message receiving module, configured to receive the perception message to include traffic condition information of a road on which the transportation means is located, the traffic condition information including at least one of: a density of traffic participants on a road section of the road, an average speed of the traffic participants on the road section, a lane level congestion condition description of the road section, a start location of the road section, and a duration of a current traffic condition.

In some embodiments, the driving-related message is specific to a lane in which the transportation means is located, and the driving-related message includes the decision planning message, the decision planning message including at least one of: an identification of the lane, right-of-way information of the lane, start time for a control of the transportation means, and a start location for the control of the transportation means.

In some embodiments, the driving-related message is specific to the transportation means.

In some embodiments, the apparatus 702 further includes: an escape request module, configured to send an escape request message to at least another transportation means, the escape request message including at least one of: identification information of the transportation means, a type of the transportation means, location information of the transportation means, travelling direction information, travelling route information, travelling speed information, and location information of a surrounding transportation means which affects a travel of the transportation means; and a response receiving module, configured to receive an escape response message from the another transportation means, the escape response message including at least one of: identification information of the another transportation means, an indication of whether the another transportation means avoids the transportation means, a planned route of the another transportation means, and a planned speed of the another transportation means.

In some embodiments, the apparatus 702 further includes: a perception message provision module, configured to provide another perception message to an on-board subsystem associated with another transportation means, the perception message including a description of another target object in the environment, and the perception message including at least one of a classification, a motion state, retention time of the motion state, physical appearance descriptive information, a type, location information, a moving speed, a moving direction, an acceleration, an acceleration direction, historical motion trajectory information, and predicted motion trajectory information of the another target object.

In some embodiments, the message receiving module includes: a takeover request module, configured to provide a takeover request message for the transportation means to the external device, the takeover request message indicating a request for at least partially taking over the driving control of the transportation means; and a decision planning message and/or control message receiving module, configured to receive at least one of the decision planning message and the control message, in response to the takeover request message. In some embodiments, the takeover request message indicates at least one of: the takeover request message indicates at least one of: identification information of the transportation means, a type of the transportation means, location information of the transportation means, travelling plan information of the transportation means, a reason for requesting takeover, and time information, wherein the travelling plan information includes at least one of: a travelling direction, a travelling destination, a planned travelling route, an allowable maximum speed and an allowable maximum acceleration of the transportation means.

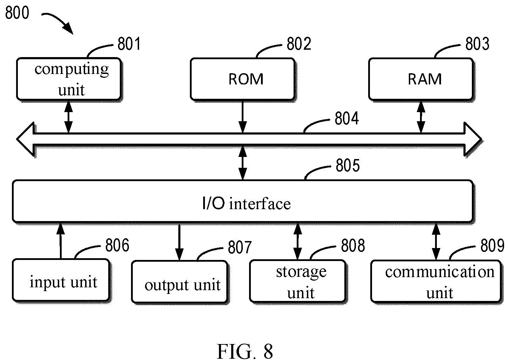

FIG. 8 is a schematic block diagram showing an example device 800 that may be used to implement embodiments of the present disclosure. The device 800 may be used to implement the roadside subsystem 112 or the vehicle-mounted subsystem 132 of FIG. 1 and FIG. 2. As shown in FIG. 8, the device 800 includes a computing unit 801, which may perform various appropriate actions and processing according to computer program instructions stored in a Read Only Memory (ROM) 802 or loaded from a storage unit 808 to a Random Access Memory (RAM) 803. In the RAM 803, various programs and data required for the operation of the device 800 may also be stored. The computing unit 801, the ROM 802, and the RAM 803 are connected to each other through a bus 804. An input/output (I/O) interface 805 is also connected to the bus 804.

A plurality of components in the device 800 are connected to the I/O interface 805, including: an input unit 806, such as a keyboard, a mouse; an output unit 807, such as various types of displays, speakers; a storage unit 808, such as a magnetic disk, an optical disk; and a communication unit 809, such as a network card, a modem, a wireless communication transceiver. The communication unit 809 allows the device 800 to exchange information/data with other devices through a computer network, such as the Internet and/or various telecommunication networks.

The computing unit 801 may be various general and/or dedicated processing components with processing and computing capabilities. Some examples of the computing unit 801 include, but are not limited to, a central processing unit (CPU), a graphics processing unit (GPU), various dedicated artificial intelligence (AI) computing chips, various computing units running machine learning model algorithms, and a digital signal processor (DSP), and any appropriate processor, controller, microcontroller, etc. The computing unit 801 executes various methods and processing described above such as the method 800. For example, in some embodiments, the method 400 or the method 500 may be implemented as a computer software program, which is tangibly contained in a machine-readable medium, such as the storage unit 808. In some embodiments, the computer program may be partially or fully loaded and/or installed on the device 800 via the ROM 802 and/or the communication unit 809. When the computer program is loaded into the RAM 803 and executed by the computing unit 801, one or more steps of the method 400 or the method 500 described above may be performed. Alternatively, in other embodiments, the computing unit 801 may be configured to execute the method 400 or the method 500 in any other suitable manner (e.g., by means of firmware).

Functions described above may be performed at least in part by one or more hardware logic components. For example, non-restrictively, exemplary types of available hardware logic components include: a Field Programmable Gate Array (FPGA), an Application Specific Integrated Circuit (ASIC), an Application Specific Standard Product (ASSP), a System on Chip (SOC), a Load Programmable Logic Device (CPLD), etc.

Program codes for implementing the method of the present disclosure may be drafted in one or combinations of a plurality of programming languages. These program codes may be provided to a processor or a controller of a general computer, a dedicated computer, or other programmable data processing means, so that when the program codes are executed by the processor or the controller, functions and/or operations specified in a flowchart and/or a block diagram are implemented. The program codes may be entirely executed on a machine, partially executed on a machine, partially executed on a machine as an independent software package and partially executed on a remote machine, or entirely executed on a remote machine or a server.

In the context of the present disclosure, a computer-readable medium may be a tangible medium, which may contain or store a program for use by or in combination with an instruction execution system, apparatus, or device. The computer-readable medium may be a computer-readable signal medium or a machine-readable storage medium. The computer-readable medium may include, but is not limited to, an electronic, magnetic, optical, electromagnetic, infrared, or semiconductor system, apparatus or device, or any suitable combination of those aforementioned. More specific examples of the machine-readable storage medium would include an electrical connection based on one or more wires, a portable computer disk, a hard disk, a Random Access Memory (RAM), a Read-Only Memory (ROM), an Erasable Programmable Read-Only Memory (EPROM or flash memory), optical fiber, a Portable Compact Disk Read-Only Memory (CD-ROM), an optical storage device, a magnetic storage device, or any suitable combination of those aforementioned.

In addition, although operations are depicted in a specific order, it should be understood that such operations are required to be performed in the shown specific order or in sequence, or all the shown operations are required to be performed to obtain desired results. Under a certain environment, multitasking and parallel processing may be advantageous. Likewise, although several specific implementation details are contained in the above discussion, these should not be construed as limitations of the scope of the present disclosure. Certain features that are described in the context of an individual embodiment may also be implemented in combination in an individual implementation. Conversely, various features that are described in the context of an individual implementation may also be implemented in a plurality of implementations individually or in any suitable sub-combination.

Although the subject matter has been described in languages specific to structural features and/or logical actions of the method, it should be understood that the subject matter defined in the appended claims is not necessarily limited to the specific features or actions described above. On the contrary, the specific features and actions described above are merely exemplary forms for implementing the claims.

## Claims

1. A driving control assisting method, comprising:
acquiring, by an external device of a transportation means, perception information related to an environment of the transportation means;
determining a description related to a target object present in the environment based on the perception information, the target object being located outside the transportation means;
generating a driving-related message based on at least the description related to the target object, the driving-related message comprising at least one of a perception message, a decision planning message, and a control message; and
providing the driving-related message to the transportation means for controlling a travel of the transportation means relative to the target object.

2. The method according to claim 1, wherein acquiring the perception information comprises acquiring at least one of:
roadside perception information sensed by a sensing device which is arranged in the environment and independent of the transportation means;
transportation means perception information sensed by a sensing device arranged in association with the transportation means; and
transportation means perception information sensed by a sensing device arranged in association with another transportation means.

3. The method according to claim 1, wherein generating the driving-related message comprises:
generating the perception message, to comprise at least the description related to the target object, comprising at least one of a classification, a motion state, retention time of the motion state, physical appearance descriptive information, a type, location information, a moving speed, a moving direction, an acceleration, an acceleration direction, historical motion trajectory information, and predicted motion trajectory information of the target obj ect.

4. The method according to claim 1, wherein generating the driving-related message further comprises:
generating the perception message to comprise traffic condition information of a road on which the transportation means is located, the traffic condition information comprising at least one of: a density of traffic participants on a road section of the road, an average speed of the traffic participants on the road section, a lane level congestion condition description of the road section, a start location of the road section, and a duration of a current traffic condition.

5. The method according to claim 1, wherein the driving-related message is specific to a lane in the environment, and providing the driving-related message to the transportation means comprises:
broadcasting the driving-related message, to enable the transportation means in the lane to obtain the driving-related message; or
sending the driving-related message to the transportation means, in response to determining that the transportation means is in the lane.

6. The method according to claim 5, wherein the driving-related message comprises the decision planning message, the decision planning message comprising at least one of: an identification of the lane, right-of-way information of the lane, start time for a control of the transportation means, and a start location for the control of the transportation means.

7. The method according to claim 1, wherein the driving-related message is specific to the transportation means.

8. The method according to claim 1, wherein providing the driving-related message comprises:
receiving a takeover request message for the transportation means, the takeover request message indicating a request for at least partially taking over the driving control of the transportation means;
providing a takeover response message to the transportation means, to indicate whether to at least partially take over the driving control of the transportation means; and
providing at least one of the decision planning message, and the control message to the transportation means, in response to determining to at least partially take over the driving control of the transportation means.

9. The method according to claim 8, wherein the takeover request message indicates at least one of: identification information of the transportation means, a type of the transportation means, location information of the transportation means, travelling plan information of the transportation means, a reason for requesting takeover, and time information, wherein the travelling plan information comprises at least one of: a travelling direction, a travelling destination, a planned travelling route, an allowable maximum speed and an allowable maximum acceleration of the transportation means; and wherein
the takeover response message indicates at least one of: whether to at least partially take over the transportation means, and start time for taking over the transportation means.

10. A method for driving control, comprising:
receiving a driving-related message from an external device of a transportation means, the driving-related message being generated based on perception information related to an environment of the transportation means, and indicating a description related to a target object located outside the transportation means, and the driving-related message comprising at least one of a perception message, a decision planning message, and a control message; and
controlling, based on the driving-related message, driving of the transportation means in the environment relative to the target object.

11. The method according to claim 10, wherein the perception information comprises at least one of:
roadside perception information sensed by a sensing device which is arranged in the environment and independent of the transportation means;
transportation means perception information sensed by a sensing device arranged in association with the transportation means; and
transportation means perception information sensed by a sensing device arranged in association with another transportation means.

12. The method according to claim 10, wherein receiving the driving-related message comprises:
receiving the perception message, to comprise at least the description related to the target object, comprising at least one of a classification, a motion state, retention time of the motion state, physical appearance descriptive information, a type, location information, a moving speed, a moving direction, an acceleration, an acceleration direction, historical motion trajectory information, and predicted motion trajectory information of the target obj ect.

13. The method according to claim 10, wherein receiving the driving-related message further comprises:
receiving the perception message to comprise traffic condition information of a road on which the transportation means is located, the traffic condition information comprising at least one of: a density of traffic participants on a road section of the road, an average speed of the traffic participants on the road section, a lane level congestion condition description of the road section, a start location of the road section, and a duration of a current traffic condition.

14. The method according to claim 10, wherein the driving-related message is specific to a lane in which the transportation means is located, and the driving-related message comprises the decision planning message, the decision planning message comprising at least one of: an identification of the lane, right-of-way information of the lane, start time for a control of the transportation means, and a start location for the control of the transportation means.

15. The method according to claim 10, wherein the driving-related message is specific to the transportation means.

16. The method according to any one of claims 10 to 15, further comprising:
sending an escape request message to at least another transportation means, the escape request message comprising at least one of: identification information of the transportation means, a type of the transportation means, location information of the transportation means, travelling direction information, travelling route information, travelling speed information, and location information of a surrounding transportation means which affects a travel of the transportation means; and
receiving an escape response message from the another transportation means, the escape response message comprising at least one of: identification information of the another transportation means, an indication of whether the another transportation means avoids the transportation means, a planned route of the another transportation means, and a planned speed of the another transportation means.

17. The method according to any one of claims 10 to 15, further comprising:
providing another perception message to an on-board subsystem associated with another transportation means, the perception message comprising a description of another target object in the environment, and the perception message comprising at least one of a classification, a motion state, retention time of the motion state, physical appearance descriptive information, a type, location information, a moving speed, a moving direction, an acceleration, an acceleration direction, historical motion trajectory information, and predicted motion trajectory information of the another target object.

18. The method according to any one of claims 10 to 15, wherein receiving the driving-related message comprises:
providing a takeover request message for the transportation means to the external device, the takeover request message indicating a request for at least partially taking over the driving control of the transportation means; and
receiving at least one of the decision planning message and the control message, in response to the takeover request message, and
wherein the takeover request message indicates at least one of: the takeover request message indicates at least one of: identification information of the transportation means, a type of the transportation means, location information of the transportation means, travelling plan information of the transportation means, a reason for requesting takeover, and time information, wherein the travelling plan information comprises at least one of: a travelling direction, a travelling destination, a planned travelling route, an allowable maximum speed and an allowable maximum acceleration of the transportation means.

19. A driving control assisting apparatus, comprising:
a perception acquisition module, configured to acquire, by an external device of a transportation means, perception information related to an environment of the transportation means;
a target object determination module, configured to determine a description related to a target object present in the environment based on the perception information, the target object being located outside the transportation means;
a message generation module, configured to generate a driving-related message based on at least the description related to the target object, the driving-related message comprising at least one of a perception message, a decision planning message, and a control message; and
a message provision module, configured to provide the driving-related message to the transportation means for controlling a travel of the transportation means relative to the target object.

20. The apparatus according to claim 19, wherein the perception acquisition module is configured to acquire at least one of:
roadside perception information sensed by a sensing device which is arranged in the environment and independent of the transportation means;
transportation means perception information sensed by a sensing device arranged in association with the transportation means; and
transportation means perception information sensed by a sensing device arranged in association with another transportation means.

21. The apparatus according to claim 19, wherein the message generation module comprises:
a first perception message generation module, configured to generate the perception message, to comprise at least the description related to the target object, comprising at least one of a classification, a motion state, retention time of the motion state, physical appearance descriptive information, a type, location information, a moving speed, a moving direction, an acceleration, an acceleration direction, historical motion trajectory information, and predicted motion trajectory information of the target object.

22. The apparatus according to claim 19, wherein the message generation module comprises:
a second perception message generation module, configured to generate the perception message to comprise traffic condition information of a road on which the transportation means is located, the traffic condition information comprising at least one of: a density of traffic participants on a road section of the road, an average speed of the traffic participants on the road section, a lane level congestion condition description of the road section, a start location of the road section, and a duration of a current traffic condition.

23. The apparatus according to claim 19, wherein the driving-related message is specific to a lane in the environment, and the message provision module comprises:
a message broadcasting module, configured to broadcast the driving-related message, to enable the transportation means in the lane to obtain the driving-related message; or
a message sending module, configured to send the driving-related message to the transportation means, in response to determining that the transportation means is in the lane.

24. The apparatus according to claim 23, wherein the driving-related message comprises the decision planning message, the decision planning message comprising at least one of: an identification of the lane, right-of-way information of the lane, start time for a control of the transportation means, and a start location for the control of the transportation means.

25. The apparatus according to claim 19, wherein the driving-related message is specific to the transportation means.

26. The apparatus according to claim 19, wherein the message provision module comprises:
a request receiving module, configured to receive a takeover request message for the transportation means, the takeover request message indicating a request for at least partially taking over the driving control of the transportation means;
a response provision module, configured to provide a takeover response message to the transportation means, to indicate whether to at least partially take over the driving control of the transportation means; and
a decision plan and/or control message provision module, configured to provide at least one of the decision planning message, and the control message to the transportation means, in response to determining to at least partially take over the driving control of the transportation means.

27. The apparatus according to claim 26, wherein the takeover request message indicates at least one of: identification information of the transportation means, a type of the transportation means, location information of the transportation means, travelling plan information of the transportation means, a reason for requesting takeover, and time information, wherein the travelling plan information comprises at least one of: a travelling direction, a travelling destination, a planned travelling route, an allowable maximum speed and an allowable maximum acceleration of the transportation means; and wherein
the takeover response message indicates at least one of: whether to at least partially take over the transportation means, and start time for taking over the transportation means.

28. An apparatus for driving control, comprising:
a message receiving module, configured to receive a driving-related message from an external device of a transportation means, the driving-related message being generated based on perception information related to an environment of the transportation means, and indicating a description related to a target object located outside the transportation means, and the driving-related message comprising at least one of a perception message, a decision planning message, and a control message; and
a driving control module, configured to control, based on the driving-related message, driving of the transportation means in the environment relative to the target obj ect.

29. The apparatus according to claim 28, wherein the perception information comprises at least one of:
roadside perception information sensed by a sensing device which is arranged in the environment and independent of the transportation means;
transportation means perception information sensed by a sensing device arranged in association with the transportation means; and
transportation means perception information sensed by a sensing device arranged in association with another transportation means.

30. The apparatus according to claim 28, wherein the message receiving module comprises:
a first perception message receiving module, configured to receive the perception message, to comprise at least the description related to the target object, comprising at least one of a classification, a motion state, retention time of the motion state, physical appearance descriptive information, a type, location information, a moving speed, a moving direction, an acceleration, an acceleration direction, historical motion trajectory information, and predicted motion trajectory information of the target object.

31. The apparatus according to claim 28, wherein the message receiving module comprises:
a second perception message receiving module, configured to receive the perception message to comprise traffic condition information of a road on which the transportation means is located, the traffic condition information comprising at least one of: a density of traffic participants on a road section of the road, an average speed of the traffic participants on the road section, a lane level congestion condition description of the road section, a start location of the road section, and a duration of a current traffic condition.

32. The apparatus according to claim 28, wherein the driving-related message is specific to a lane in which the transportation means is located, and the driving-related message comprises the decision planning message, the decision planning message comprising at least one of: an identification of the lane, right-of-way information of the lane, start time for a control of the transportation means, and a start location for the control of the transportation means.

33. The apparatus according to claim 28, wherein the driving-related message is specific to the transportation means.

34. The apparatus according to any one of claims 28 to 33, further comprising:
an escape request module, configured to send an escape request message to at least another transportation means, the escape request message comprising at least one of: identification information of the transportation means, a type of the transportation means, location information of the transportation means, travelling direction information, travelling route information, travelling speed information, and location information of a surrounding transportation means which affects a travel of the transportation means; and
a response receiving module, configured to receive an escape response message from the another transportation means, the escape response message comprising at least one of: identification information of the another transportation means, an indication of whether the another transportation means avoids the transportation means, a planned route of the another transportation means, and a planned speed of the another transportation means.

35. The apparatus according to any one of claims 28 to 33, further comprising:
a perception message provision module, configured to provide another perception message to an on-board subsystem associated with another transportation means, the perception message comprising a description of another target object in the environment, and the perception message comprising at least one of a classification, a motion state, retention time of the motion state, physical appearance descriptive information, a type, location information, a moving speed, a moving direction, an acceleration, an acceleration direction, historical motion trajectory information, and predicted motion trajectory information of the another target object.

36. The apparatus according to any one of claims 28 to 33, wherein the message receiving module comprises:
a takeover request module, configured to provide a takeover request message for the transportation means to the external device, the takeover request message indicating a request for at least partially taking over the driving control of the transportation means; and
a decision planning message and/or control message receiving module, configured to receive at least one of the decision planning message and the control message, in response to the takeover request message, and
wherein the takeover request message indicates at least one of: the takeover request message indicates at least one of: identification information of the transportation means, a type of the transportation means, location information of the transportation means, travelling plan information of the transportation means, a reason for requesting takeover, and time information, wherein the travelling plan information comprises at least one of: a travelling direction, a travelling destination, a planned travelling route, an allowable maximum speed and an allowable maximum acceleration of the transportation means.

37. An electronic device, comprising:
one or more processors; and
a storage device for storing one or more programs, wherein the one or more programs, when being executed by the one or more processors, enable the one or more processors to implement the method according to any one of claims 1 to 9.

38. An electronic device, comprising:
at least one processors; and
a memory communicatively connected with the at least one processor; wherein
the memory stores instructions executable by the at least one processor, and the instructions are executed by the at least one processor, to enable the at least one processors to perform the method according to any one of claims 10 to 18.

39. A non-transitory computer-readable storage medium, which stores computer instructions for enabling a computer to perform the method according to any one of claims 1 to 9.

40. A non-transitory computer-readable storage medium which stores computer instructions for enabling a computer to perform the method according to any one of claims 10 to 18.

41. A system for coordinated driving control, comprising:
a roadside subsystem comprising the apparatus according to any one of claims 19 to 27; and
a vehicle-mounted subsystem comprising the apparatus according to any one of claims 28 to 36.
